(19) Europäisches Patentamt
European Patent Office
Office européen des brevets

(11) Veröffentlichungsnummer: **0 174 909 B1**

(12) **EUROPÄISCHE PATENTSCHRIFT**

(45) Veröffentlichungstag der Patentschrift: **16.10.91**

(51) Int. Cl.⁵: **C09B 62/503**, D06P 1/38

(21) Anmeldenummer: **85810383.1**

(22) Anmeldetag: **26.08.85**

# (54) Reaktivfarbstoffe, deren Herstellung und Verwendung.

(30) Priorität: **30.08.84 CH 4155/84**

(43) Veröffentlichungstag der Anmeldung:
**19.03.86 Patentblatt 86/12**

(45) Bekanntmachung des Hinweises auf die Patenterteilung:
**16.10.91 Patentblatt 91/42**

(84) Benannte Vertragsstaaten:
**BE CH DE FR GB IT LI**

(56) Entgegenhaltungen:
**BE-A- 670 089**
**DE-A- 2 054 198**
**FR-A- 2 130 673**

(73) Patentinhaber: **CIBA-GEIGY AG**
**Klybeckstrasse 141**
**CH-4002 Basel(CH)**

(72) Erfinder: **Aeschlimann, Peter**
**Sandweg 16**
**CH-4123 Allschwil(CH)**
Erfinder: **Schwander, Hansrudolf, Dr.**
**Unterm Schellenberg 189**
**CH-4125 Riehen(CH)**

**EP 0 174 909 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Reaktivfarbstoffe sind in grosser Zahl z.B. aus der FR-A 2 130 673 bekannt; die darin offenbarten Verbindungen weisen einen faserreaktiven Rest der Formel

$$-NR-\overset{O}{\overset{\|}{C}}-NR'-(CH_2)_{2-6}-NR''-W ,$$

worin R, R' und R" je Wasserstoff oder einen Alkylrest und W einen heterocyclischen Reaktivrest bedeuten, auf. Es besteht jedoch weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte Aufgabe gelöst wird.

Gegenstand der Erfindung sind Reaktivfarbstoffe der Formel

$$D\left[\underset{\displaystyle R}{\underset{|}{N}} - CO - \underset{\displaystyle B}{\underset{|}{N}} - A - SO_2 - Y\right]_n \qquad (1) ,$$

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder unsubstituiertes oder durch Halogen, Hydroxy, Cyan, $C_1$-$C_4$-Alkoxy, Carboxy oder Sulfo substituiertes $C_1$-$C_4$-Alkyl, A ein Polymethylenrest mit 2 bis 6 C-Atomen oder dessen verzweigte Isomere, der durch Chlor, Brom, Fluor, Hydroxy, Sulfato, Acyloxy mit 1 bis 4 C-Atomen, Cyano, Carboxy, Alkoxycarbonyl mit 1 bis 5 C-Atomen oder Carbamoyl substituiert sein kann, oder ein Dialkylenätherrest mit 1 bis 6 C-Atomen in jedem Alkylenglied, unabhängig voneinander; Y ein Rest $-CH=CH_2$ oder $-CH_2CH_2-Z$, Z ein unter alkalischen Bedingungen abspaltbarer anorganischer oder organischer Rest, B Wasserstoff oder der Rest eines unsubstituierten oder durch Halogen, Hydroxy, Cyan, $C_1$-$C_4$-Alkoxy, Carboxy oder Sulfo substituierten Kohlenwasserstoffes, und n = 1 oder 2 ist.

Der Rest D in Formel (1) kann an seinem Grundgerüst die bei organischen Farbstoffen üblichen Substituenten gebunden enthalten.

Als Beispiele für weitere Substituenten im Rest D seien genannt Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-$\beta$-hydroxy-

äthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für R seien die folgenden Reste genannt: Methyl, Aethyl, Propyl, Isopropyl, Butyl, Isobutyl, sek.-Butyl, tert.-Butyl, Carboxymethyl, β-Carboxyäthyl,. β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist R Wasserstoff, Methyl oder Aethyl.

Als Polymethylenrest kommt für A in Formel (1) ein geradkettiger oder verzweigter Alkylenrest in Betracht, z.B. Aethylen, n-Propylen, Isopropylen, n-Butylen, n-Pentylen und n-Hexylen. Dieser kann ebenfalls weitersubstituiert sein, z.B. durch Chlor, Cyan oder Hydroxy. Bevorzugt ist $C_{2-4}$-Alkylen, das keinen weiteren Substituenten enthält, insbesondere Aethylen.

Als ein unter alkalischen Bedingungen abspaltbarer anorganischer oder organischer Rest Z kommt eine der folgenden anionisch abspaltbaren Gruppen in Betracht:

$-OSO_3H$, $-SSO_3H$, $-OCOCH_3$, $-OPO_3H_2$, 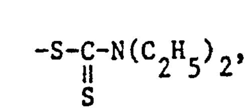, 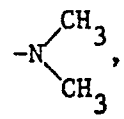, 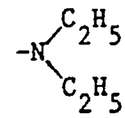,

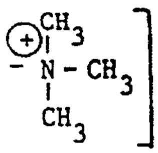 $X^{\ominus}$ (X = Halogen), -Cl, -Br, -F, 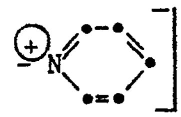 $Cl^{\ominus}$,

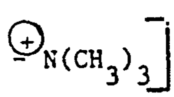 $CH_3SO_4^{\ominus}$, 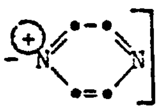 $X^{\ominus}$, 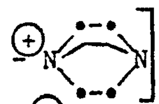 $X^{\ominus}$, 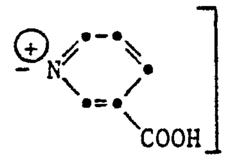 $X^{\ominus}$

($X^{\ominus}$ = Halogen),

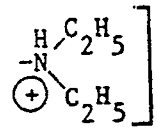 $Cl^{\ominus}$, 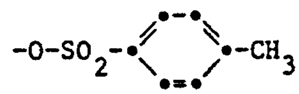, $-O-SO_2-N(CH_3)_2$, 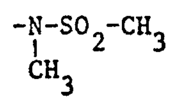,

$-O-SO_2-CH_3$, $-S-C{\equiv}N$, 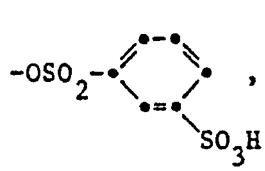, 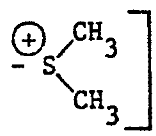 $CH_3SO_4^{\ominus}$,

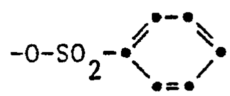, $-OOCCCl_3$, $-OOCCHCl_2$, $-OOCCH_2Cl$,

$-O-O_2SR$ (R = Alkyl oder Aryl), $-O-SO_2N(C_2H_5)_2$, 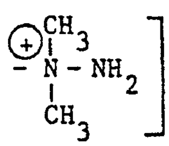 $Cl^{\ominus}$;

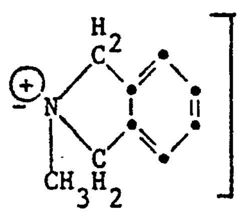 $Cl^{\ominus}$, $-NHCH_2CH_2SO_3H$, 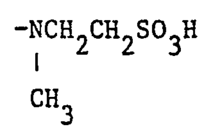.

Vorzugsweise ist Z der Rest $-OSO_3H$, $-SSO_3H$, $-OCOCH_3$, $-OPO_3H_2$ oder -Cl.

Der Rest eines gegebenenfalls substituierten Kohlenwasserstoffs B ist z.B. ein Alkylrest, der geradkettig oder verzweigt ist, der vorzugsweise 1 bis 6 Kohlenstoffatome aufweist, und der weitersubstituiert sein kann, z.B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z.B. durch Methyl, Aethyl, Methoxy, Aethoxy, Chlor, Brom, Carboxy, Sulfo oder Sulfomethyl substituiert sein kann.

Als Beispiele für B seien die folgenden Substituenten genannt: Methyl, Aethyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-Sulfomethylphenyl. Bevorzugt sind unsubstituierte Alkylreste mit 1 bis 4 Kohlenstoffatomen.

Insbesondere ist B Wasserstoff oder ein Rest der Formel

$- A - SO_2 - Y$ (2) ,

worin A und Y die unter Formel (1) angegebenen Bedeutungen haben.

Falls B ein Rest der Formel (2) ist, können die beiden Reste der Formel (2), welche an das Stickstoffatom des externen Restes in Formel (1) gebunden sind, gleich oder verschieden sein. Vorzugsweise sind beide Reste der Formel (2) gleich.

Der in eckige Klammern eingeschlossene Teil von Formel (1) ist ein Reaktivrest, welcher ein- oder zweimal im Molekül vorhanden sein kann; beide Formelvarianten sind gleich wichtig. FAlls n = 2 ist, können die beiden Reaktivreste gleich oder verschieden sein; vorzugsweise sind beide Reste gleich. Der Reaktivrest enthält ein oder zwei Substituenten Y, die nach Art einer nucleophilen Addition reagieren können.

Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Bevorzugte Ausbildungsformen der Reaktivfarbstoffe der Formel (1) sind:

a) Reaktivfarbstoffe der Formel (1), worin B Wasserstoff oder $C_{1-4}$-Alkyl ist.

b) Reaktivfarbstoffe der Formel (1), worin B ein Rest der Formel

$- A - SO_2 - Y$ (2)

ist, worin A und Y die unter Formel (1) angegebenen Bedeutungen haben.

c) Reaktivfarbstoffe der Formel (1), worin A Aethylen ist.

Die unter a) bis c) jeweils nicht genannten Symbole der Formel (1) haben die bei der Erläuterung der Formel (1) angegebenen Bedeutungen. In Betracht zu ziehen sind insbesondere auch Kombinationen von Merkmalen gemäss a) bis c). Bevorzugt sind weiterhin:

d) Reaktivfarbstoffe gemäss a), der Formel

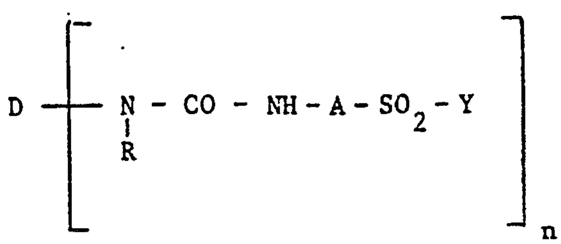

(3),

worin D, R, Y und n die unter Formel (1) angegebenen Bedeutungen haben, und A $C_{2-4}$-Alkylen ist.

e) Reaktivfarbstoffe gemäss d), worin A Aethylen ist.

f) Reaktivfarbstoffe gemäss b), der Formel

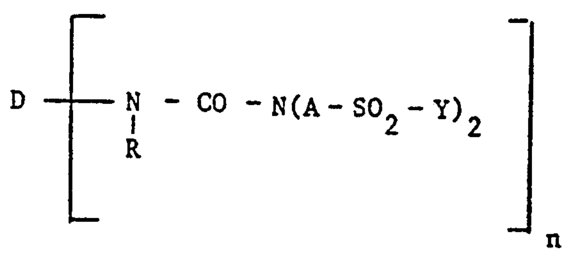

(4),

worin D, R, Y und n die unter Formel (1) angegebenen Bedeutungen haben, und A $C_{2-4}$-Alkylen ist.

g) Reaktivfarbstoffe gemäss f), worin A Aethylen ist.

h) Reaktivfarbstoffe der Formel (1) oder gemäss a) bis g), worin Y Vinyl, β-Sulfatoäthyl, β-Thiosulfatoäthyl, β-Phosphatoäthyl, β-Chloräthyl oder β-Acetoxyäthyl ist.

i) Reaktivfarbstoffe der Formel (1) oder gemäss a) bis h), worin D der Rest eines Mono- oder Disazofarbstoffes ist.

j) Reaktivfarbstoffe der Formel (1) oder gemäss a) bis h), worin D der Rest eines Metallkomplexazo- oder Formazanfarbstoffes ist.
k) Reaktivfarbstoffe der Formel (1) oder gemäss a) bis h), worin D der Rest eines Anthrachinonfarbstoffes ist.
l) Reaktivfarbstoffe gemäss j), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist.

Bevorzugt sind insbesondere:
m) Reaktivfarbstoffe gemäss 1), der Formel

$$\left[D_1-N=N-K\right]\!\!-\!\!\left[\underset{\underset{R}{|}}{N}-CO-NHCH_2CH_2SO_2CH_2CH_2Cl\right]_n \qquad (5)$$

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente oder an die Kupplungskomponente gebunden ist, oder je ein Reaktivrest an die Diazokomponente und an die Kupplungskomponente gebunden ist.
n) Reaktivfarbstoffe gemäss i), der Formel

$$\left[D_1-N=N-D_2-N=N-K\right]\!\!-\!\!\left[\underset{\underset{R}{|}}{N}-CO-NHCH_2CH_2SO_2CH_2CH_2Cl\right]_n \qquad (6),$$

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente $D_1$ oder an die Krupplungskomponente K gebunden ist, oder je ein Reaktivrest an $D_1$ und K gebunden ist.
o) Reaktivfarbstoffe gemäss 1), der Formel

$$\left[D_1-N=N-K-N=N-D_2\right]\!\!-\!\!\left[\underset{\underset{R}{|}}{N}-CO-NHCH_2CH_2SO_2CH_2CH_2Cl\right]_n \qquad (7),$$

worin $D_1$ und $D_2$ je ein Rest einer Diazokomponente der Benzol- oder Naphthalinreihe, K der Rest einer Kupplungskomponente der Aminonaphtholsulfonsäure-Reihe, R Wasserstoff, Methyl oder Aethyl, und n = 1 oder 2 ist, und der Reaktivrest an die Diazokomponente $D_1$ oder an die Diazokomponente $D_2$ gebunden ist, oder je ein Reaktivrest an $D_1$ und $D_2$ gebunden ist.
p) 1:1-Kupferkomplexe von Reaktivfarbstoffen gemäss m) bis o).

Das Verfahren zur Herstellung von Reaktivfarbstoffen der Formel (1) ist dadurch gekennzeichnet, dass

man organische Farbstoffe der Formel

$$D-\left[\underset{\underset{R}{|}}{N}-H\right]_n \qquad (8)$$

oder Farbstoffvorprodukte, und mindestens ein Aequivalent eines den Rest der Formel

$$-CO-\underset{\underset{B}{|}}{N}-A-SO_2-Y \qquad (9)$$

einführenden Mittels zu einem Reaktivfarbstoff der Formel (1) umsetzt, wobei D, R, n, A, Y und B in den Formeln (8) und (9) die unter Formel (1) angegebenen Bedeutungen haben, und dass man im Falle der Verwendung von Farbstoffvorprodukten, diese in die gewünschten Endfarbstoffe umwandelt.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Die Einführung eines Restes der Formel (9) kann nach verschiedenen Methoden erfolgen. Vorzugsweise setzt man Farbstoffe der Formel (8) oder geeignete Vorprodukte, die eine -N(R)H Gruppe enthalten, um mit Isocyanaten der Formel

$OCN-A-SO_2-Y$ (10)

oder mit Carbamidsäurechloriden der Formel

$$Cl-CO-\underset{\underset{B}{|}}{N}-A-SO_2-Y \qquad (11),$$

wobei der substituierte Harnstoff gemäss Formel (1) gebildet wird. Oder man kondensiert zunächst den Farbstoff bzw. das Vorprodukt mit Phenolchlorkohlensäureester und erhält den entsprechenden Carbamidsäurephenylester. Dieser wird mit einem Amin der Formel

$$H\underset{\underset{B}{|}}{N}-A-SO_2-Y \qquad (12)$$

umgesetzt, unter Bildung des Farbstoffes der Formel (1) bzw. eines sekundären Vorproduktes, wobei Phenol freigesetzt wird.

Die Isocyanate der Formel (10) und die Carbamidsäurechloride der Formel (11) können durch Phosgenierung von Aminen der Formel (12) gewonnen werden, wobei im Falle des Isocyanates B = H in Formel (12) ist. Für nähere Einzelheiten zu den in Frage kommenden Verfahren, siehe HOUBEN-WEYL, Methoden der Organischen Chemie, 4. Auflage 1952, Georg Thieme Verlag, Stuttgart, Band VIII, Sauerstoffverbindungen III, Seiten 149 bis 163.

Ferner können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Y ein Rest

$HO-CH_2CH_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Y die Vinylgruppe $H_2C=CH-$ ist, und lagert an das Zwischenprodukt Thioschwefelsäure an, wobei ein Rest $HO_3SS-CH_2CH_2-$entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0° C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80° C erfolgen. Vorzugsweise erfolgt die Sulfatierung durch Eintragen der betreffenden Verbindung in Schwefelsäuremonohydrat bei Temperaturen zwischen 5 und 15° C. Die Einführung eines anderen unter alkalischen Bedingungen abspaltbaren Restes für Z in eine Verbindung der Formel (1) oder ein Zwischenprodukt anstelle der Sulfatogruppe, beispielsweise einer Thiosulfatogruppe erfolgt in an sich bekannter Weise. Der Weg der Herstellung über eine Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffes ist. Beispiele für derartige, aus zwei oder mehr als zwei Komponenten zusammengesetzte Farbstoffe sind: Monoazo-, Disazo-, Trisazo-, Metallkomplexazo-, Formazan- und Azomethinfarbstoffe. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste an die Diazo- oder Kupplungskomponente, oder, falls n = 2 ist, an verschiedene oder gleiche Reste von Ausgangskomponenten, d.h. Diazo- oder Kupplungskomponenten, gebunden. Vorzugsweise sind, für den Fall, dass n = 2 ist, die beiden Reaktivreste an je eine Komponente, Diazokomponente oder Kupplungskomponente, gebunden Die Reaktivfarbstoffe haben dann z.B. die Formeln

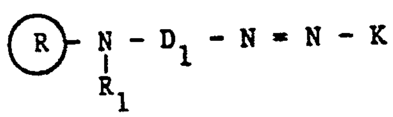

(13) ,

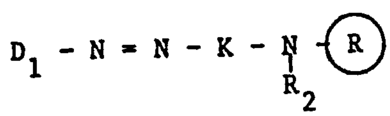

(14) ,

und

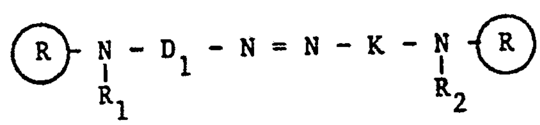

(15) ,

worin $R_1$ und $R_2$ unabhängig voneinander die gleiche Bedeutung haben wie R in Formel (1), $D_1$ der Rest einer Diazokomponente, und K der Rest einer Kupplungskomponente ist, und Ⓡ einen Reaktivrest bedeutet. In Betracht zu ziehen sind auch Reaktivfarbstoffe der Formeln (13) bis (15), worin der Rest $D_1$ und/oder K noch einen weiteren Reaktivrest einschliesst, so dass auch tri- und tetra-reaktive Farbstoffe umfasst sind. Die zusätzlichen, in $D_1$ oder K eingeschlossenen Reaktivreste können, wie Ⓡ , über Aminogruppe, oder in anderer Weise, z.B. durch eine direkte Bindung an $D_1$ bzw. K gebunden sein. Die obigen Erläuterungen gelten sinngemäss auch für Disazofarbstoffe und Metallkomplexazofarbstoffe.

In Betracht zu ziehen sind ferner auch Reaktivfarbstoffe der Formel (1), worin einer der Reaktivreste oder beide über einen Rest der Formel

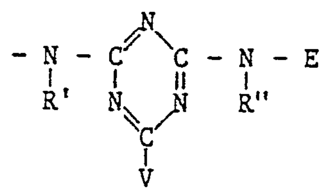

(16)

an den Chromophor gebunden sind. Dabei ist der Rest der Formel (9) über die -N(R) -Gruppe an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. R' und R" sind unabhängig voneinander Wasserstoff oder ein $C_{1-4}$-Alkylrest; und V ist ein Halogenatom, eine Aminogruppe, Hydroxy, eine Alkoxy-, Aryloxy-, Alkylthio- oder Arylthiogruppe.

Falls man von Farbstoffvorprodukten ausgeht, gelangt man zu den Reaktivfarbstoffen der Formel (1), indem man eine Komponente des Farbstoffes der Formel (8), die eine Gruppe -N(R)H enthält, mit einem den Rest der Formel (9) einführenden Mittel umsetzt, und dann mit der anderen Komponente des Farbstoffes der Formel (8) umsetzt. Bei der Herstellung der bevorzugten Azofarbstoffe müssen die Diazokomponenten und die Kupplungskomponenten zusammen mindestens eine Aminogruppe -N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Umsetzung mit einem den Rest der Formel (9) einführenden Mittel durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy- oder Carboxygruppen, enthalten, vor oder gegebenenfalls auch nach der Einführung des Restes der Formel (9) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

<u>Organische Farbstoffe der Formel (8)</u>

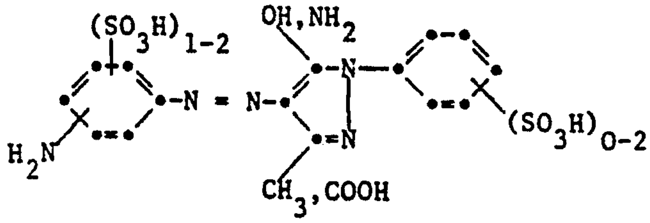

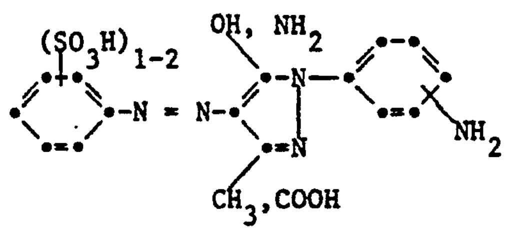

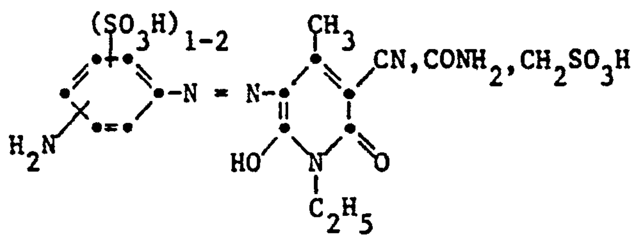

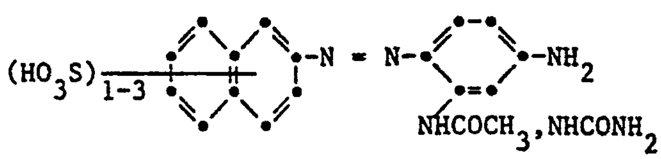

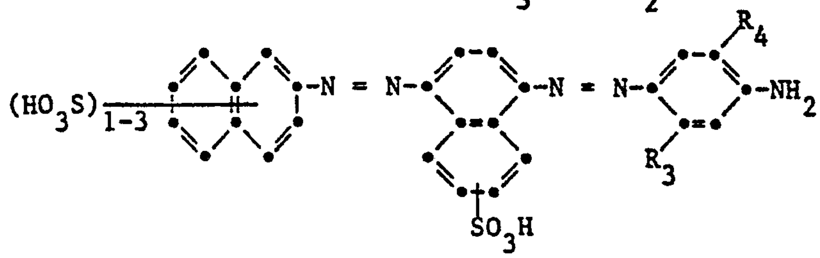

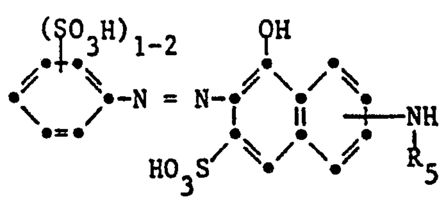

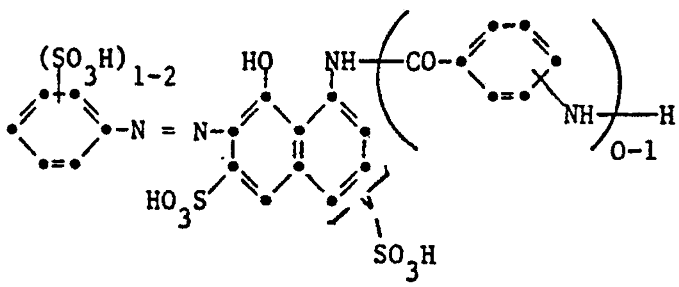

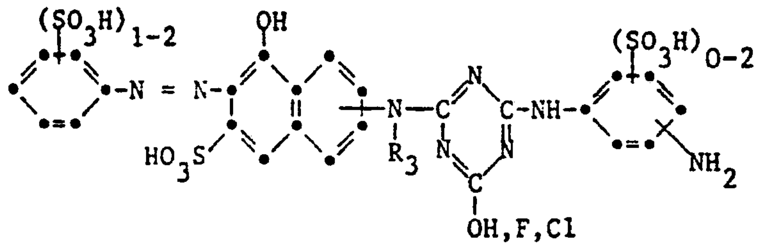

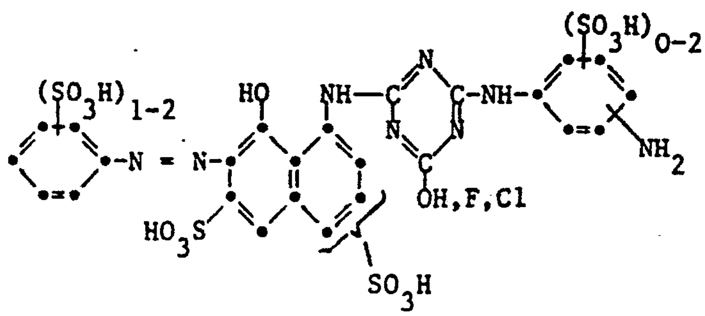

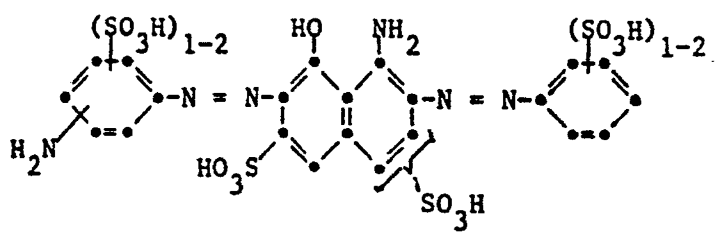

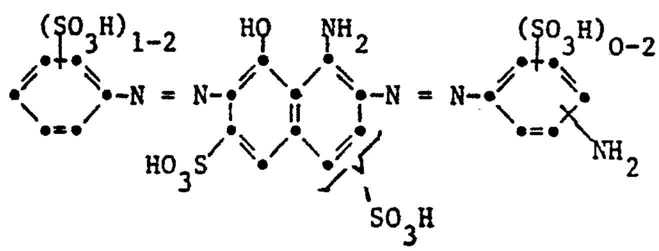

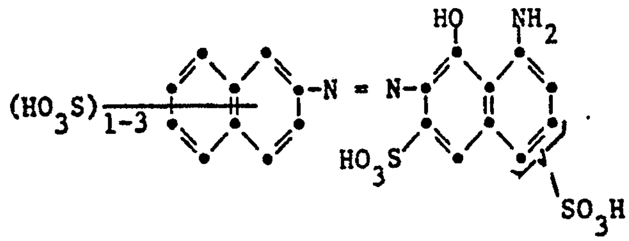

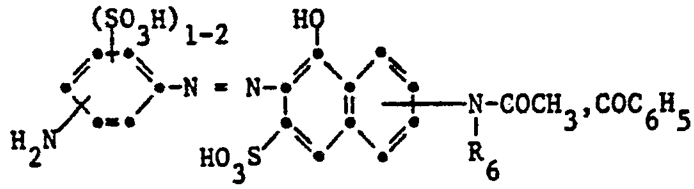

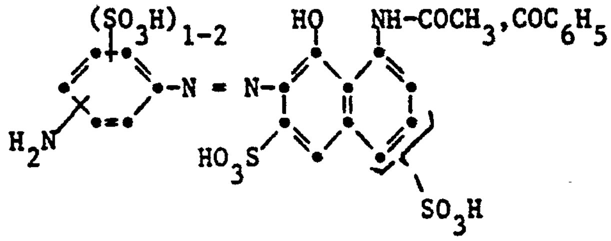

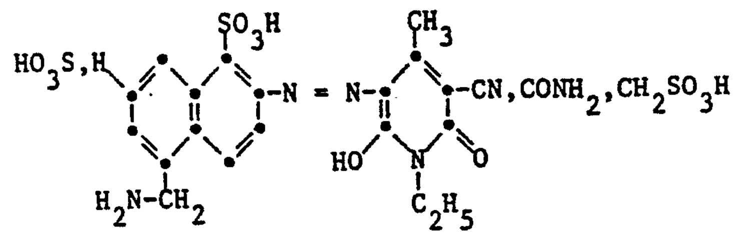

Metallkomplexe von Farbstoffen der Formeln:

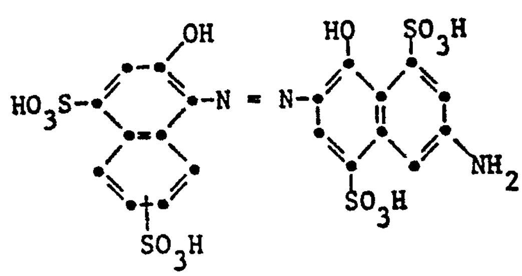

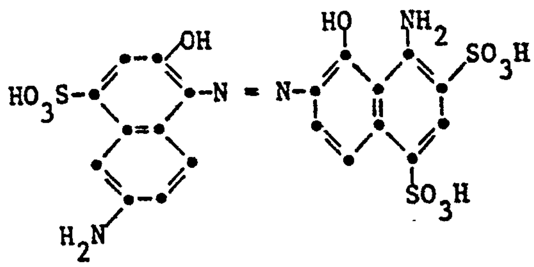

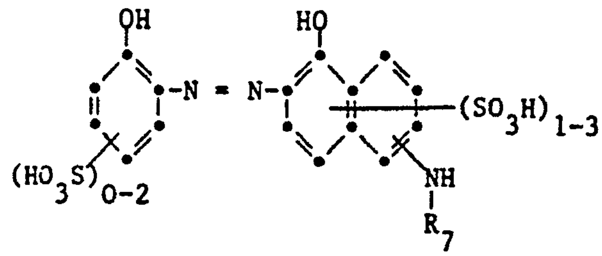

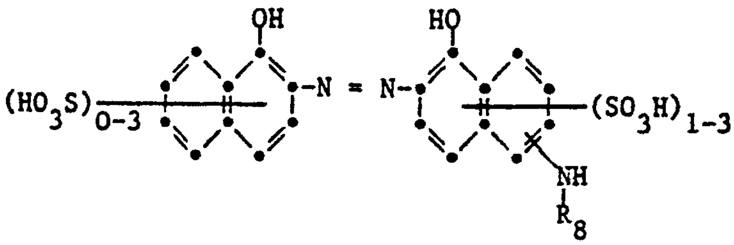

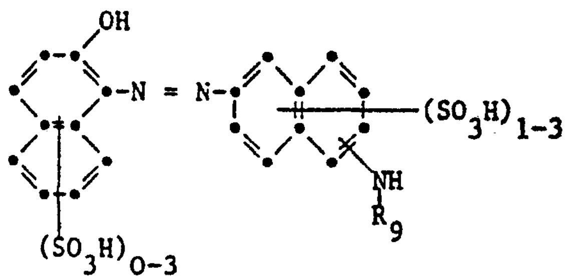

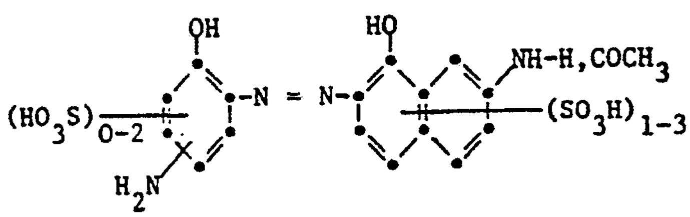

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. die können symmetrisch oder mit beliebigen anderen Liganden unsymmetrisch aufgebaut sein.

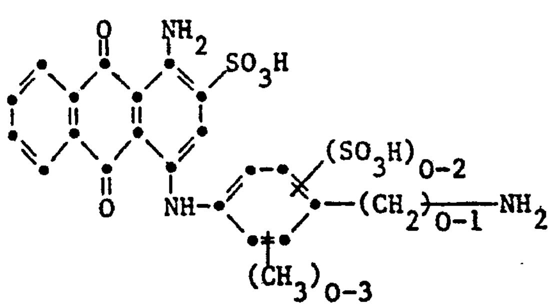

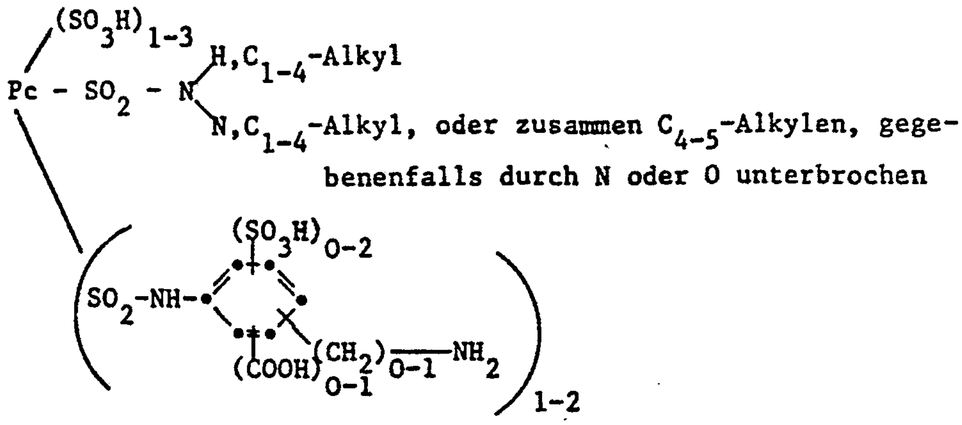

In dieser Formel steht Pc für den Cu- oder Ni-Phthalocyaninrest, die Gesamtzahl der Substituenten am Pc-Gerüst ist 4.

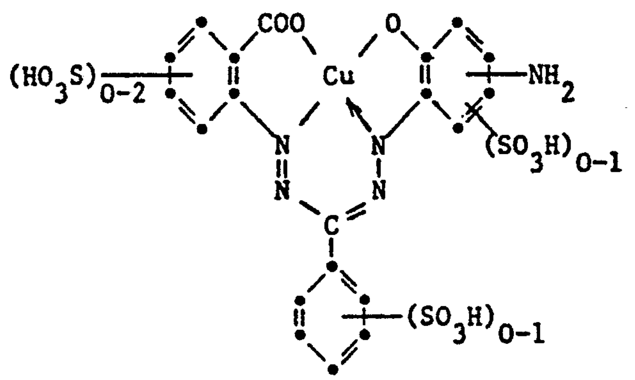

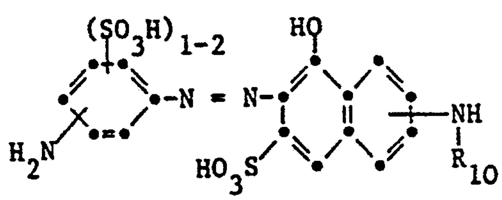

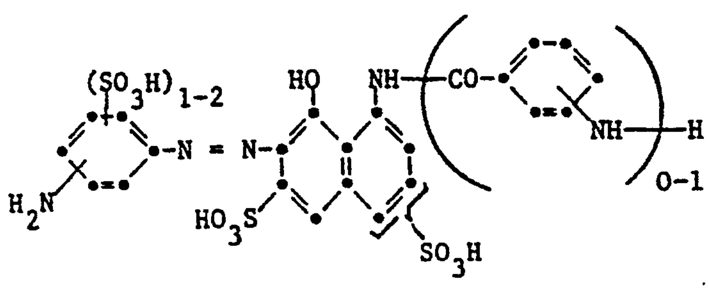

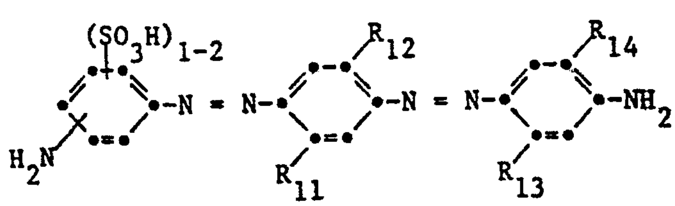

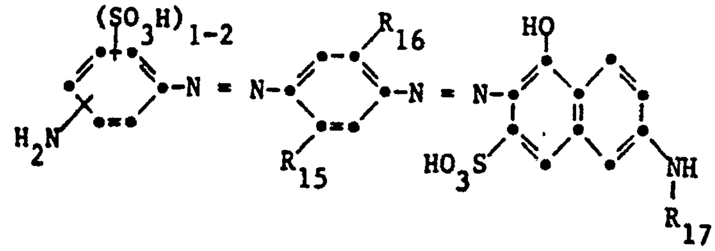

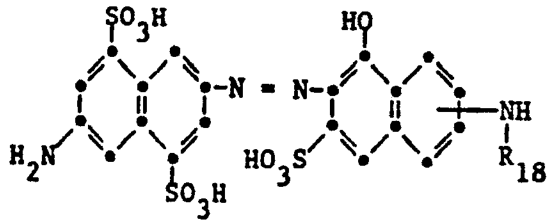

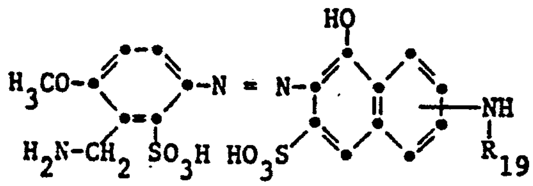

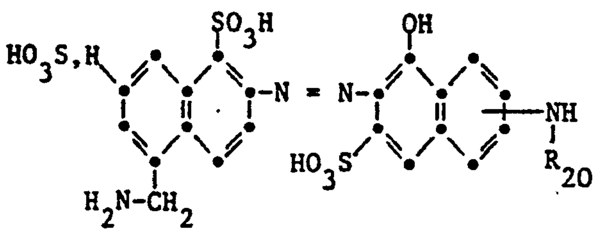

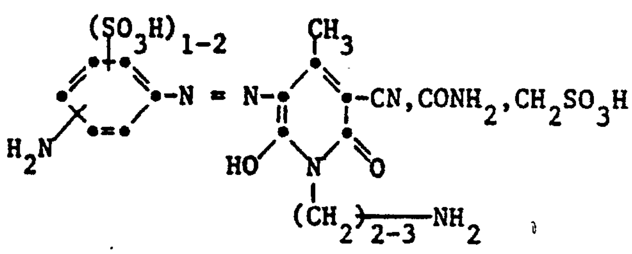

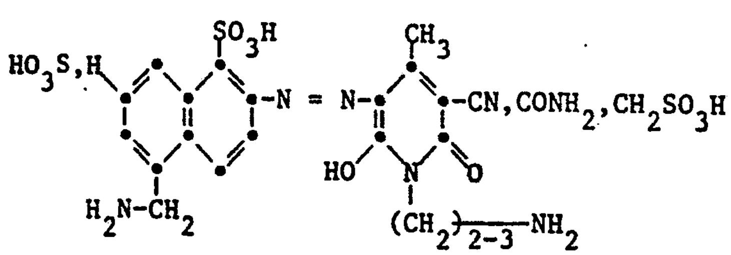

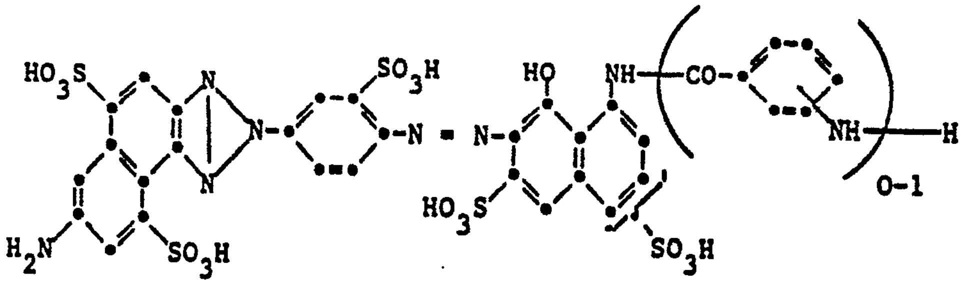

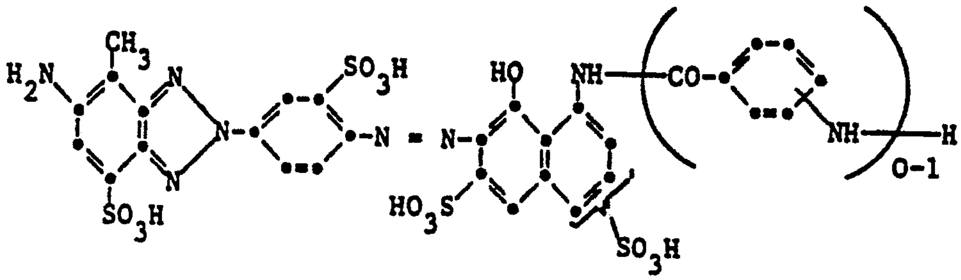

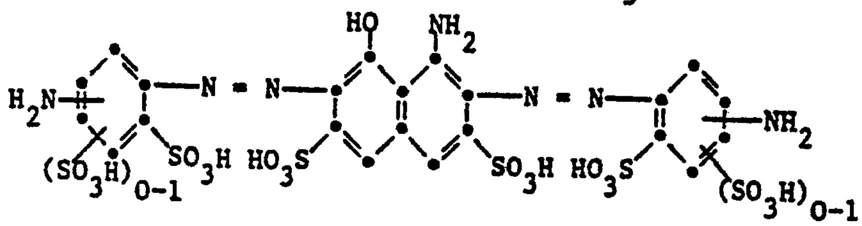

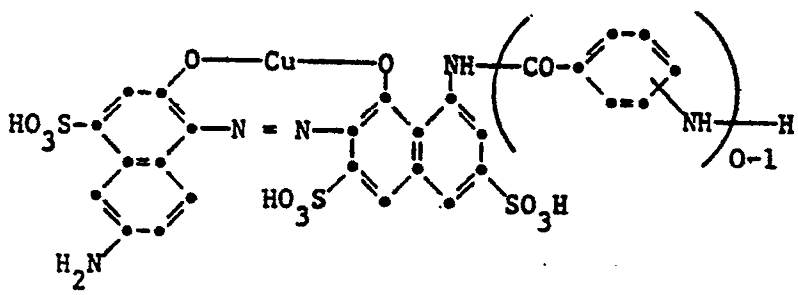

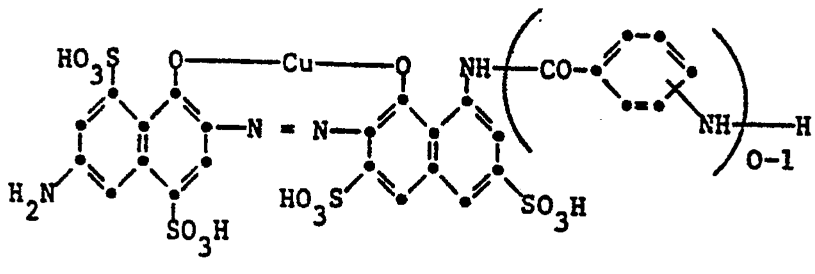

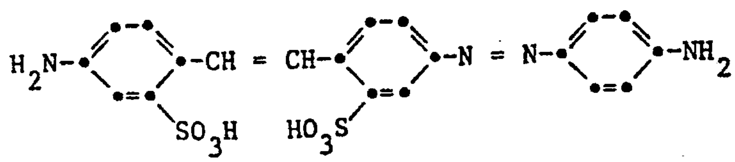

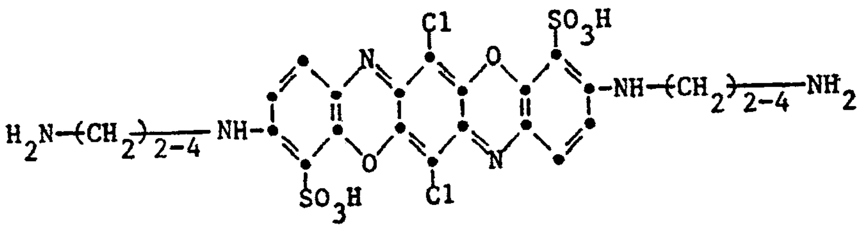

In den oben aufgeführten Formeln bedeuten die Reste $R_5$ bis $R_{10}$ und $R_{17}$ bis $R_{20}$ Wasserstoff oder $C_{1-4}$-Alkyl, und die Reste $R_3$, $R_4$ und $R_{11}$ bis $R_{16}$ Wasserstoff, $C_{1-4}$-Alkyl, $C_{1-4}$-Alkoxy, $C_{1-4}$-Alkanoylamino, Ureido, oder Halogen, wobei die Reste $R_3$, $R_4$, ... etc., die zu ein und derselben Formel gehören, voneinander unabhängig sind. Vorzugsweise bedeuten die Reste $R_5$ bis $R_{10}$ und $R_{17}$ bis $R_{20}$ Wasserstoff, Methyl oder Aethyl, und die Reste $R_3$, $R_4$ und $R_{11}$ bis $R_{16}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Methoxy, Aethoxy, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert. Als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

Als Diazo- und Kupplungskomponenten seien einzeln genannt:

Diazokomponenten:

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-tri fluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2- , -4-, -5-, -6-, -7- oder -8-sulfonsäure, 2-Aminonaphthalin-1-, -3-, -4-, -5-, -6-m -7- oder 8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol,1,4-Diamio-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin,2,2'-Dimethylbenzidin, 4,2'- Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminoaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw, - Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon,1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder 3-chlor-4-methyl-6-hydroxypyridon-(2), 1-Aethyl-3-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2),N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo-naphthalin-3,6-disulfonsäure, 1-Amino-8-hydroxy-2-(2',5'-disulfophenylazo)-naphthalin-3,6-disulfonsäure, 1-$\beta$-Aminoäthyl-3-cyan-4-methyl-6-hydroxypyridon-(2),1-$\gamma$-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfato-äthylamino-4-methoxybenzol, 1-Amino-3-sulfo-benzylamino-benzol, 1-Amino-3-sulfo-benzylamino-4-chlorbenzol, 1-Amino-3-N,N-di-sulfo-benzylaminobenzol.

Amine der Formel (12)

β-(β-Chloräthylsulfonyl)-äthylamin, β-(β-Bromäthylsulfonyl)-äthylamin, β-Vinylsulfonyl-äthylamin, γ-(β-Chloräthylsulfonyl)-propylamin, α-(β-Chloräthylsulfonyl)-isopropylamin, δ-(β-Chloräthylsulfonyl)-butylamin, β-(β-Chloräthylsulfonyl)-isobutylamin, ε-(β-Chloräthylsulfonyl)-pentylamin,
β-[β'-(β''-Chloräthylsulfonyl)äthyloxy]-äthylamin,
β-(β-Chloräthyl-sulfonyl)-hexyl-amin,
N-Methyl-N-β-(β-chloräthyl-sulfonyl)-äthyl-amin,
N-Aethyl-N-β-(β-chloräthyl-sulfonyl)-äthyl-amin,
N-Propyl-N-β-(β-chloräthyl-sulfonyl)-äthyl-amin,
N-Butyl-N-β-(β-chloräthyl-sulfonyl)-äthyl-amin,
N-Pentyl-N-(β-chloräthyl-sulfonyl)-äthyl-amin,
N-Hexyl-N-β-(β-chloräthyl-sulfonyl)-äthyl-amin,
N-Nonyl-N-β-(β-chloräthyl-sulfonyl)-äthyl-amin,
N-Dodecyl-N-β-(β-chloräthyl-sulfonyl)-äthyl-amin,
N-Hexadecyl-N-β-(β-chloräthyl-sulfonyl)-äthyl-amin,
N-Octadecyl-N-β-(β-chloräthyl-sulfonyl)-äthyl-amin,
N-Carboxymethyl-N-β-(β-bromäthyl-sulfonyl)-äthyl-amin,
N-Sulfatomethyl-N-β-(β-chloräthyl-sulfonyl)-äthyl-amin,
N-β-Carboxyäthyl-N-γ-(β-chloräthyl-sulfonyl)-propyl-amin,
N-β-Sulfatoäthyl-N-γ-(β-chloräthyl-sulfonyl)-propyl-amin,
N-β-Sulfatoäthyl-N-δ-(β-chloräthyl-sulfonyl)-butyl-amin,
N-β-Aethoxyäthyl-N-δ-(β-chloräthyl-sulfonyl)-butyl-amin,
N-γ-Chlorpropyl-N-β-(β-chloräthyl-sulfonyl)-äthyl-amin,
N-Phenyl-N-β-(β-chloräthyl-sulfonyl)-äthyl-amin,
N-p-Chlorphenyl-N-β-(β-chloräthyl-sulfonyl)-äthyl-amin
N-o-Methylphenyl-N-β-(β-chloräthyl-sulfonyl)-äthyl-amin,
N-p-Methoxyphenyl-N-β-(β-chloräthyl-sulfonyl)äthyl-amin,
N-m-Sulfophenyl-N-β-(β-chloräthyl-sulfonyl)-äthyl-amin,
N-p-Sulfophenyl-N-β-(β-chloräthyl-sulfonyl)-äthyl-amin,
Bis-[β-(β-chloräthyl-sulfonyl)-äthyl]-amin,
Bis-[β-(β-bromäthyl-sulfonyl)-äthyl]-amin,
Bis-[γ-(β-chloräthyl-sulfonyl)-propyl]-amin,
Bis-[δ-(β-chloräthyl-sulfonyl)-butyl]-amin,
Bis-(β-vinyl-sulfonyl-äthyl)-amin,
N-β-Cyanäthyl-N-γ-(β-chloräthyl-sulfonyl)-propyl-amin.
Bevorzugt sind die Amine von niederem Molekulargewicht wie das β-(β-Chloräthyl-sulfonyl)-äthyl-amin und sein N-Methylderivat.
Bevorzugt ist ferner das Bis-[β-(β-chloräthyl-sulfonyl)äthyl]-amin.
β-(β-Hydroxyäthyl-sulfonyl)-äthyl-amin (2-Taurylāthanol),
γ-(β-Hydroxyäthyl-sulfonyl)-propyl-amin,
α-(β-Hydroxyäthyl-sulfonyl)-isopropyl-amin,
δ-(β-Hydroxyäthyl-sulfonyl)butyl-amin,
β-(β-Hydroxyäthyl-sulfonyl)-isobutyl-amin,
ε-(β-Hydroxyäthyl-sulfonyl)-pentyl-amin,
β-(β-Hydroxyäthyl-sulfonyl)-hexyl-amin,
N-Methyl-N-β-(β-hydroxyäthyl-sulfonyl)-äthyl-amin,
N-Aethyl-N-β-(β-hydroxyäthyl-sulfonyl)-äthyl-amin,
N-Propyl-N-β-(β-hydroxyäthyl-sulfonyl)-äthyl-amin,
N-Butyl-N-β-(β-hydroxyäthyl-sulfonyl)-äthyl-amin,
N-Pentyl-N-β-(β-hydroxyäthyl-sulfonyl)-äthyl-amin,
N-Hexyl-N-β-(β-hydroxyäthyl-sulfonyl)-äthyl-amin,
N-Nonyl-N-β-(β-hydroxyäthyl-sulfonyl)-äthyl-amin,

N-Dodecyl-N-β-(β-hydroxyäthyl-sulfonyl)-äthyl-amin,
N-Hexadecyl-N-β-(β-hydroxyäthyl-sulfonyl)-äthyl-amin,
N-Oktadecyl-N-β-(β-hydroxyäthyl-sulfonyl)-äthyl-amin,
N-Carboxymethyl-N-β-(β-hydroxyäthyl-sulfonyl)-äthyl-amin,
N-Sulfatomethyl-N-β-(β-hydroxyäthyl-sulfonyl)-äthyl-amin,
N-β-Carboxyäthyl-N-γ-(β-hydroxyäthyl-sulfonyl)-propyl-amin,
N-β-Sulfatoäthyl-N-γ-(β-hydroxyäthyl-sulfonyl)-propyl-amin,
N-β-Sulfatoäthyl-N-δ-(β-hydroxyäthyl-sulfonyl)-butyl-amin,
N-β-Aethoxyäthyl-N-δ-(β-hydroxyäthyl-sulfonyl)-butyl-amin,
N-γ-Chlorpropyl-N-β-(β-hydroxyäthyl-sulfonyl)-äthyl-amin,
N-Phenyl-N-β-(β-hydroxyäthyl-sulfonyl)-äthyl-amin,
N-p-Chlorphenyl-N-β-(β-hydroxyäthyl-sulfonyl)-äthyl-amin,
N-o-Methylphenyl-N-β-(β-hydroxyäthyl-sulfonyl)-äthyl-amin,
N-p-Methoxyphenyl-N-β-(β-hydroxyäthyl-sulfonyl)-äthyl-amin,
N-m-Sulfophenyl-N-β-(β-hydroxyäthyl-sulfonyl)-äthyl-amin,
N-p-Sulfophenyl-N-β-(β-hydroxyäthyl-sulfonyl)äthyl-amin,
Bis-[β-(β-hydroxyäthyl-sulfonyl)-äthyl]-amin,
Bis-[γ-(β-hydroxyäthyl-sulfonyl)-propyl]-amin,
Bis-[δ-(β-hydroxyäthyl-sulfonyl)-butyl]-amin,
sowie die entsprechenden sulfatierten Verbindungen.

Bevorzugt sind die Amine von niederem Molekulargewicht, wie das β-(β-Hydroxyäthyl-sulfonyl)-äthylamin und sein N-Methylderivat. Bevorzugt ist ferner das Bis-[β-(β-hydroxyäthyl-sulfonyl)-äthyl]-amin, sowie die entsprechenden sulfatierten Verbindungen.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Umsetzung der Reaktivkomponenten mit den Diazokomponenten und den Kupplungskomponenten bzw. mit acylierbaren Monoazo- oder Disazo-Zwischenprodukten bzw. mit den aminogruppenhaltigen Farbstoffen erfolgen vorzugsweise in wässriger Lösung oder Suspension, bei niedriger Temperatur und bei schwach saurem, neutralem bis schwach alkalischem pH-Wert. Gegebenenfalls wird der bei der Kondensation freiwerdende Halogenwasserstoff laufend durch Zugabe wässriger Alkalihydroxide, - carbonate oder -bicarbonate neutralisiert.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in

saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

Herstellung der Isocyanatverbindung (I)

$O=C=N\text{-}CH_2CH_2SO_2CH_2CH_2Cl$ (I)

0,5 Mol 2-Aminoäthyl-2'-chloräthylsulfonhydrochlorid, gut getrocknet, werden in

250 ml Chlorbenzol bei 75° Badtemperatur vermischt und unter Rühren mit Phosgen (1-3 Blasen/sec.) begast. Die Badtemperatur wird allmählich auf 95° erhöht. Nach Einleitung von insgesamt

250 g Phosgen liegt ein klares 2-Phasengemisch vor. Nach Spülen mit Stickstoff wird das Lösungsmittel unter Vakuum abgedampft. Man erhält ein Oel, das gemäss Elementaranalyse zu ca. 65% aus dem Isocyanat (I) und zu 35% aus der Vorstufe (II)

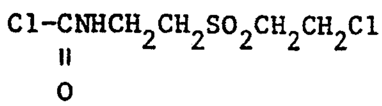

(II)

besteht.

Eine GC-Analyse, bei einer Injektortemperatur von 160° C ergibt einen Isocyanatgehalt von 95%. Die Substanz (I) ist destillierbar. Sdp. 104-105° C / 0,02-0,04 Torr.

Beispiel 2:

Umsetzung von (I) mit H-Säure

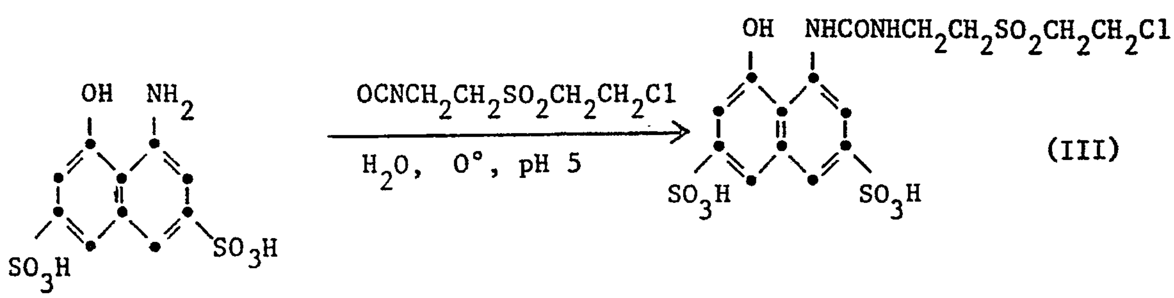


(III)

40 g H-Säure (0,1 Mol) werden in

250 ml Wasser bei pH 5,0 gelöst und auf 0° gekühlt. Nun tropft man bei einem konstanten pH von 5.0 und einer Temperatur von 0° C

26 g Isocyanatmischung aus Beispiel 1) innert 45-60 Minuten unter intensivem Rühren zu und kontrolliert den Umsatz dünnschichtchromatografisch. Nach einer Stunde wird die gelbliche Lösung neutral bei 40° zur Trockne eingeengt. Die erhaltene Verbindung (III) ist praktisch einheitlich.

Beispiel 3: 0,03 Mol 2-Aminonaphthalin-1,5-Disulfosäure wird in 100 ml Wasser mit Lauge alkalisch klar

gelöst, mit 0,03 Mol $NaNO_2$ versetzt. Diese Lösung wird bei 0-5° in eine Mischung von 100 g Eiswasser und 10 ml konz. Salzsäure eingetropft. Die erhaltene Diazosuspension wird 1 Std. bei 0-5° gerührt. Der Nitritüberschuss wird vernichtet und 0,033 Mol Kuppler der Formel (III) in wenig Wasser gelöst zur Diazosuspension gegossen. Der pH-Wert wird durch Zugabe von 2n NaOH-Lösung auf pH 6-7 erhöht. Die Kupplung ist sofort beendet, es liegt eine rote Lösung vor. Nun wird auf 30° C erwärmt und 30 Minuten bei pH 9-10 vinyliert.

Die Isolierung des Farbstoffes erfolgt bei pH 7.0 mit 20% Salz. Der Farbstoff wird abfiltriert, mit 20%-iger Salzlösung gewaschen und bei 50° im Vakuumtrockenschrank getrocknet. Man erhält 18,7 g eines roten Farbstoffes der Formel IV der gut löslich ist und sich für das Kaltfärben gut eignet

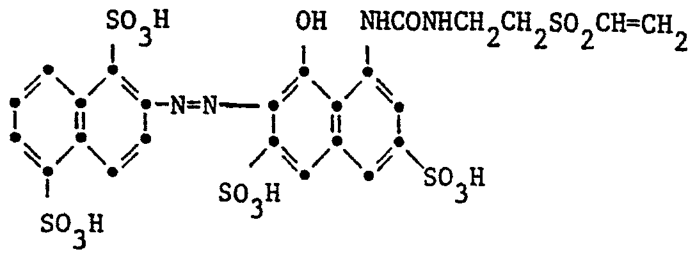

(IV)

Beispiel 4: Anstelle von 2-Aminonaphthalin-1,5-Disulfosäure in Beispiel 3 kann die Diazokomponente der Formel (V)

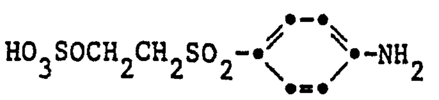

(V)

auf gleiche Art diazotiert und auf denselben Kuppler, wie im Beispiel 3 angeführt, gekuppelt werden. Nach alkalischer Vinylierung erhält man eine im Kaltverweilverfahren quantitativ fixierte Färbung.

Der eingesetzte Farbstoff hat die Formel

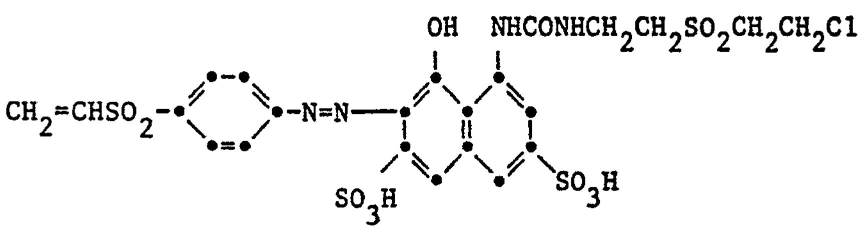

Beispiel 5: 0,025 Mol Farbstoff der Formel

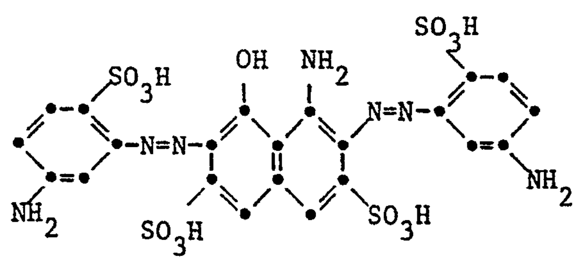

(VI)

wird in 400 ml heissen Wassers neutral klar gelöst und bei pH 5.0 und 0° C innerhalb von 4 Std. mit 0,075 Mol Produkt aus Beispiel 1 acyliert. Nach Klarfiltration wird mit 10% Kochsalz gesalzen. Der erhaltene Farbstoff der Formel VII ist rein und ist im Auszieh- sowie Kaltverweilverfahren mit sehr guten Fixierwerten einsetzbar.

Der Farbstoff hat die Formel

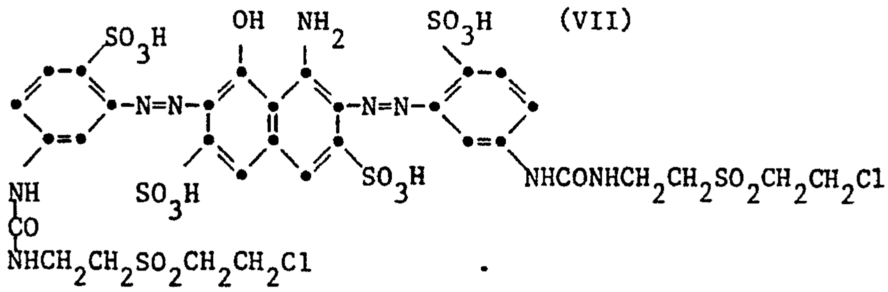

(VII)

Beispiel 6: Zu einer Lösung von 2/100 Mol des Zwischenproduktes der Formel

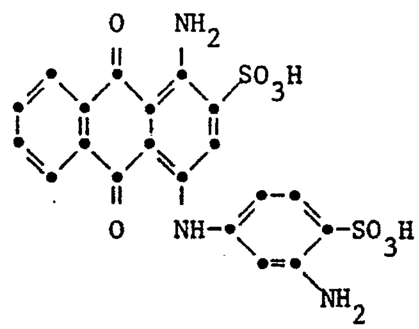

in 200 ml Wasser lässt man bei einer Temperatur von 35-40° bei intensivem Rühren innerhalb ca. einer Stunde 4,9 ml Chlorameisensäure-phenylesterzutropfen, wobei man den pH-Wert durch Zugabe von 10%iger Sodalösung bei 5,5-6 hält. Der Fortschritt der Umsetzung lässt sich dünnschichtchromatographisch verfolgen. Man erhält eine blaue Lösung, welche die Zwischenstufe der Formel

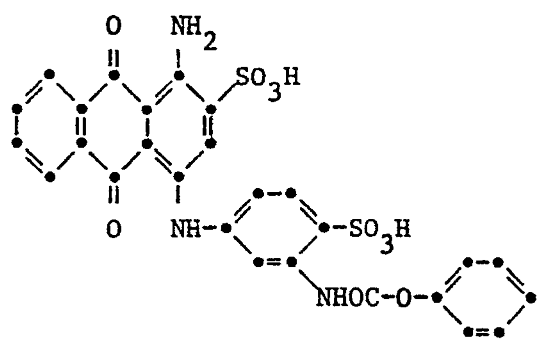

enthält.

Zu dieser Lösung gibtman 4,6 g der Verbindung der Formel

$H_2N-CH_2-CH_2-SO_2-CH_2-CH_2-OH$

worauf man die Temperatur auf 45° erhitzt und während 8 Stunden bei pH 7,5 rührt. Auch in dieser Stufe lässt sich der Grad der Umsetzung im Dünnschichtchromatogramm verfolgen.

Durch Zugabe von 15 Vol.% Kaliumchlorid wird die erhaltene Verbindung der Formel

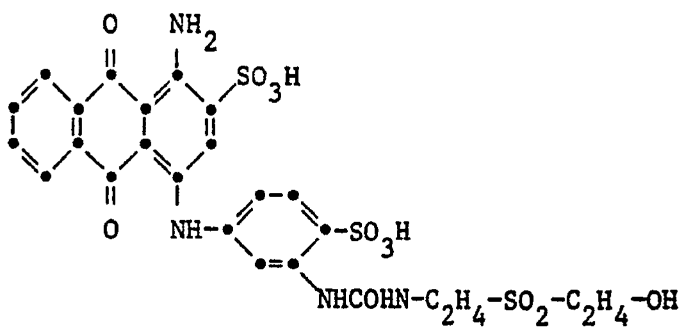

als Kaliumsalz gefällt, abfiltriert und anschliessend im Vakuum bei 110° getrocknet.

Zur Sulfatierung trägt man 30 g des so erhaltenen Kaliumsalzes bei Raumtemperatur in 150 ml vorgelegtes Monohydrat ein, rührt das Gemisch während zwei Stunden bei Raumtemperatur und giesst dasselbe anschliessend auf 400 g Eis. Man filtriert die gebildete Fällung ab, wäscht dieselbe mit 20%iger Kaliumchlorid-Lösung, worauf man das Nutschgut in 150 ml Wasser anschlämmt und die Suspension durch Zugabe von Natronlauge auf pH 5,5 stellt.

Man versetzt mit 5 Vol.% Kaliumchlorid, filtriert das Kaliumsalz des ausgefällten Farbstoffs der Formel

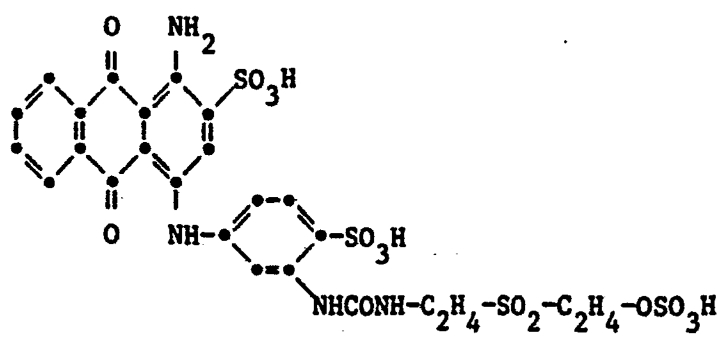

ab und trocknet dasselbe im Vakuum bei 60°. Man erhält den Farbstoff als blaues Pulver, welches sich in Wasser mit blauer Farbe löst. Nach den für Vinylsulfon-Farbstoffe üblichen Reaktiv-Färbeverfahren auf Baumwolle appliziert erhält man rotstichigblaue Färbungen welche gute Echtheitseigenschaften aufweisen.

Verwendet man anstelle des oben aufgeführten Anthrachinonfarbstoffs bei analogem Vorgehen dementsprechend andere Anthrachinonfarbstoffe als Edukte, so erhält man die in der folgenden Tabelle aufgeführten Reaktivfarbstoffe, welche auf Baumwolle appliziert ebenfalls echte blaue Färbungen ergeben.

Tabelle 1:

| Nr. | Farbstoffe | Nuance auf Baumwolle |
| --- | --- | --- |
| 1 | 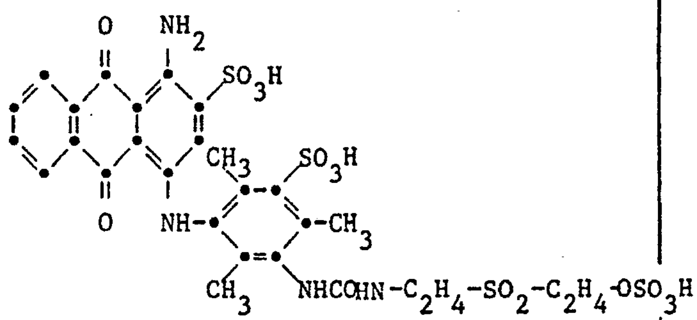 | rotstichig-blau |
| 2 | 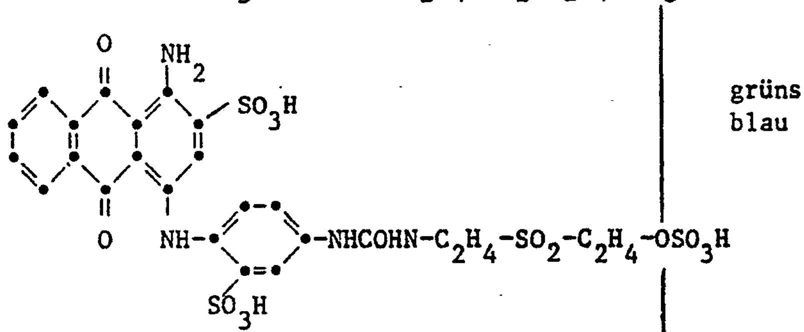 | grünstichig-blau |
| 3 | 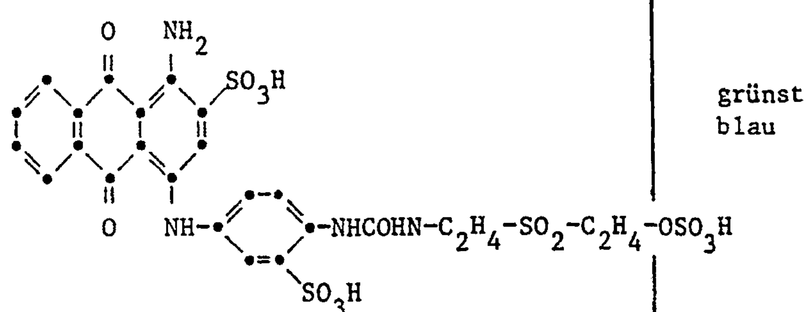 | grünstichig-blau |
| 4 | 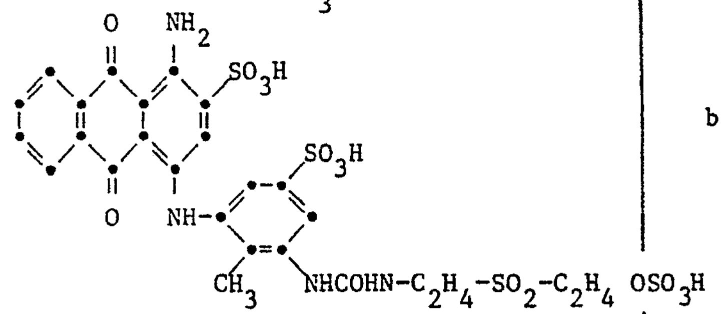 | blau |

Beispiel 7: Ausgehend vom Formazan-Farbstoff der Formel

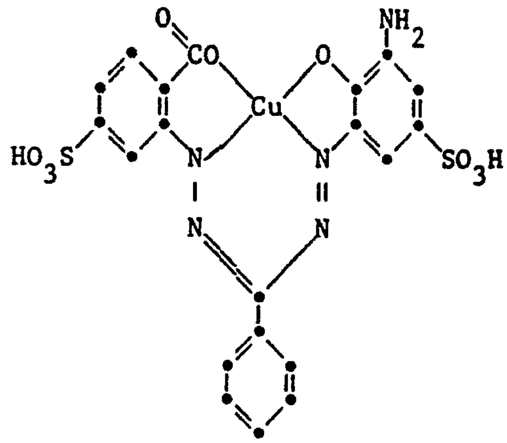

erhält man entsprechend dem in Beispiel 6 beschriebenen Vorgehen durch Acylierung mit Chlorameisensäure-phenylester in wässriger Lösung bei pH 5.5-6 und 40° anschliessender Umsetzung des so gebildeten Zwischenproduktes mit 2-Amino-2'-hydroxy-diäthylsulfon bei 40-50° und pH 7,5 das Produkt der Formel

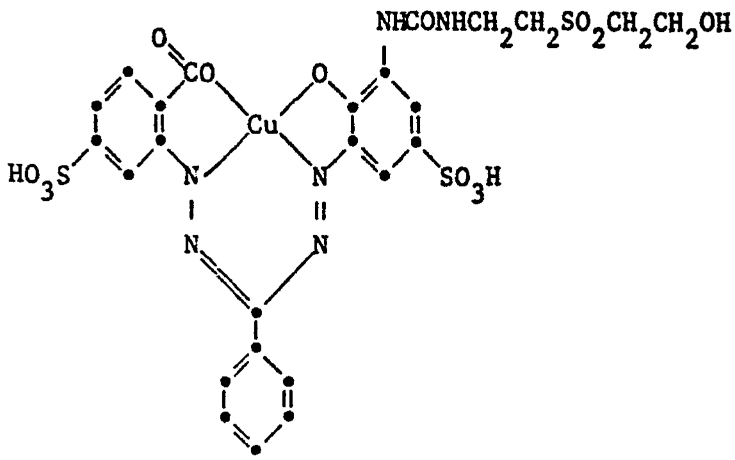

zur Sulfatierung trägt man 2/100 Mol dieser Verbindung in 30 ml N-Methyl-pyrrolidon ein, gibt dazu 2 ml Chlorsulfonsäure und rührt das Gemisch während 2 Stunden bei einer Temperatur von 40-42° C. Man giesst hierauf das Gemisch auf 100 ml Eiswasser, stellt durch Zugabe von Natriumbicarbonat den pH auf 5,5 und extrahiert das Methyl-pyrrolidon mit Methylenchlorid. Aus der Lösung des Farbstoffs wird derselbe durch Zugabe von Kaliumchlorid als Kaliumsalz ausgefällt, abfiltriert und im Vakuum bei 60° getrocknet. Das Kaliumsalz des Farbstoffs der Formel

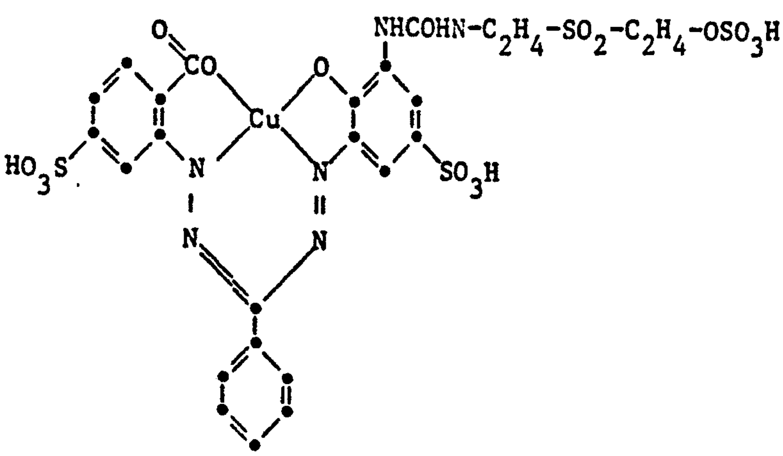

bildet ein blaues Pulver, welches sich in Wasser mit blauer Farbe löst.
Nach den für Vinylsulfonfarbstoffe üblichen Methoden als Reaktivfarbstoff auf Baumwolle appliziert erhält man blaue Färbungen mit guten Echtheitseigenschaften.

Verwendet man als Edukt andere als den oben aufgeführten Formazan-Farbstoff, so erhält man bei analogem Vorgehen dementsprechend die in der folgenden Tabelle aufgeführten Farbstoffe, welche als Reaktivfarbstoffe auf Baumwolle gefärbt echte blaue Färbungen ergeben.

Tabelle 2:

| Nr. | Farbstoff | Nuance auf Baumwolle |
|---|---|---|
| 1 | 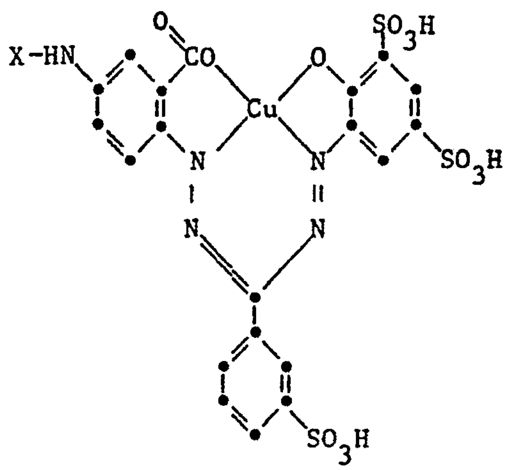 X = $HO_3S-O-C_2H_4-SO_2-C_2H_4-NH-CO-$ | blau |
| 2 | 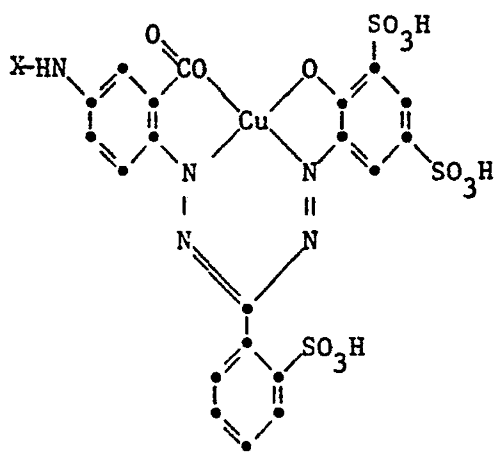 | blau |

Beispiel 8: Zu einer Lösung von 2/100 Mol des Farbstoffs der Formel

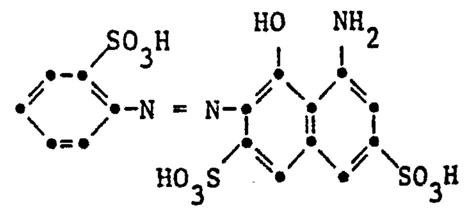

in 30 ml Wasser lässt man bei 35-40° bei intensivem Rühren langsam 7 ml Chlorameisensäure-phenylester zutropfen, wobei man den pH mit 10%iger Sodalösung bei 5-5,5 hält. Der Grad der Umsetzung lässt sich im Dünnschicht-Chromatogramm verfolgen.

Zu der erhaltenen Lösung des Produkts der Formel

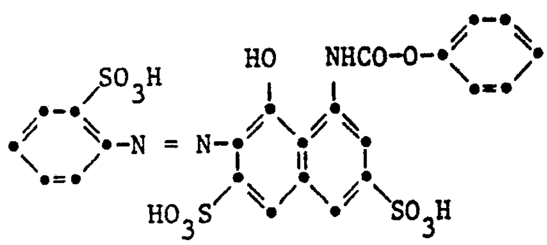

gibt man 3,8 g 2-Amino-2'-hydroxy-diäthylsulfon und rührt das Gemisch während 5 Stunden bei 38-40° und pH 7,5. Zur Entfernung freigesetzten Phenols extrahiert man mit Methylenchlorid, stellt hierauf mit Natronlauge auf pH 7 und isoliert das gebildete Produkt der Formel

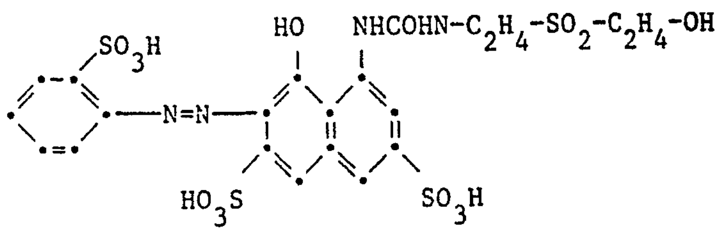

durch Eindampfen der Lösung im Rotationsverdampfer im Vakuum als Natriumsalz, welches man noch bei 110° im Vakuumschrank nachtrocknet.

Zur Sulfatierung trägt man 18 g des oben erhaltenen Natriumsalzes in 30 ml N-Methylpyrrolidon ein, versetzt mit 4 ml Chlorsulfonsäure und rührt das Gemisch während 4 Stunden bei 40-42°, worauf man dasselbe auf 150 ml Eiswasser aufgiesst. Durch Zugabe von Natriumbicarbonat stellt man auf pH 5,5 und extrahiert anschliessend das Methylpyrrolidon mit Methylenchlorid. Die Lösung des gebildeten Farbstoffes der Formel

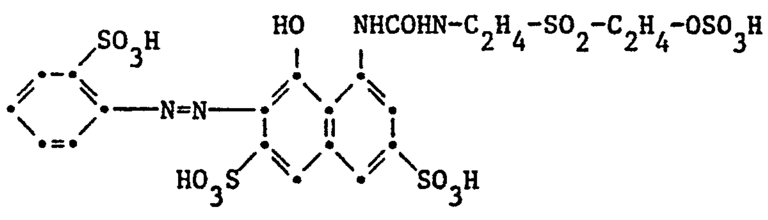

in Form seines Natriumsalzes dampft man im Rotationsverdampfer im Vakuum bei 40° zur Trockne ein. Man erhält den Farbstoff als rotes Pulver, welches sich in Wasser mit roter Farbe löst.

Als Reaktivfarbstoff nach den für Vinylsulfonfarbstofte üblichen Färbeverfahren auf Baumwolle appliziert erhält man blaustichig-rote Färbungen mit guten Echtheitseigenschaften.

Unter Verwendung der entsprechenden Edukte erhält man bei gleichem Vorgehen die beiden Farbstoffe der Formeln

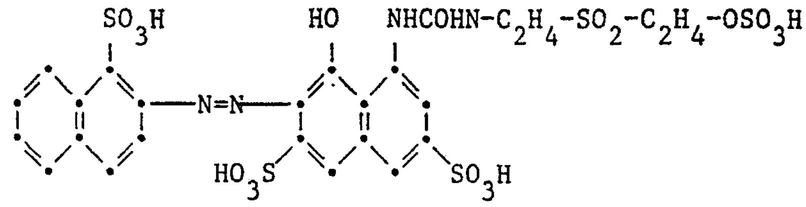

und

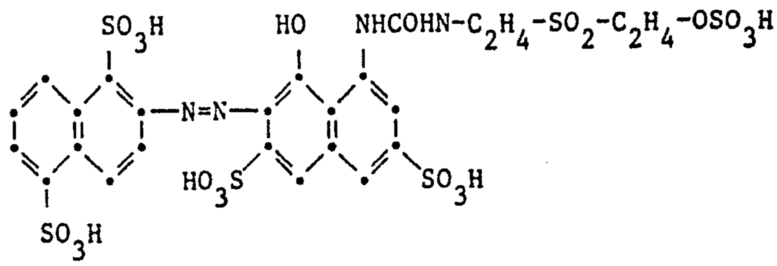

welche auf Baumwolle appliziert blaustichig rote Färbungen mit ebenfalls guten Echtheitseigenschaften ergeben.

Beispiel 9: Zu einer Suspension von 5/100 Mol der Verbindung der Formel

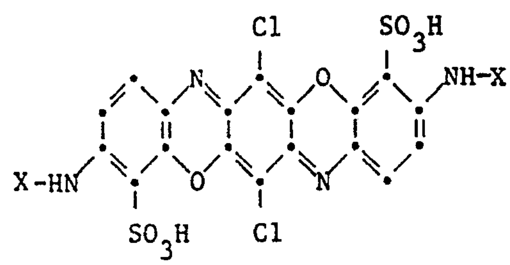

$$X = -CH_2-CH_2-CH_2-NH_2$$

in 2 000 ml Wasser lässt man bei einer Temperatur von 38-40° im Zeitraum von 7 Stunden 30 ml Chlorameisensäure-phenylester zutropfen, wobei man den pH-Wert durch Zugabe von 10%-iger Sodalösung bei 6-6,5 hält.

Zu der erhaltenen blauen Suspension, welche das Produkt mit

$X = CH_2-\ CH_2-CH_2-NHOC-O-$ 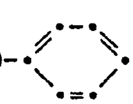

enthält, gibt man 17 g 2-Amino-2'-Hydroxydiaethylsulfon und rührt das Gemisch während 6 Stunden bei 58-60° und pH 7,5.

Man versetzt hierauf mit 10 Vol.-% Kaliumchlorid, lässt auf Raumtemperatur abkühlen, filtriert die gebildete Fällung und wäscht dieselbe mit 10%.-iger Kaliumchloridlösung. Nach Trocknung im Vakuum bei 110° erhält man das Kaliumsalz des Produkts der obigen Formel, worin

$X = -CH_2-CH_2-CH_2-NHCOHN-C_2H_4-SO_2-C_2H_4-OH$

als blaues Pulver.

Zur Sulfatierung trägt man 55 g des so erhaltenen Zwischenproduktes in 100 ml N-Methyl-pyrrolidon ein, lässt anschliessend 13,5 ml Chlorsulfonsäure zutropfen und rührt das gebildete Gemisch während 4

Stunden bei 40-42°. Man giesst hierauf dasselbe auf 350 g Eis und stellt anschliessend durch Zugabe von Natriumbicarbonat auf pH 5,5. Man extrahiert nun das Methylpyrrolidon mit Methylenchlorid, versetzt anschliessend mit 20 Vol-% Kaliumchlorid, filtriert die gebildete Fällung ab, wäscht diese mit 20%-iger Kaliumchloridlösung und trocknet anschliessend bei 60° im Vacuum.

Man erhält das Kaliumsalz des Farbstoffs der obigen Formel, worin

X = $CH_2$-$CH_2$-$CH_2$-NHCOHN-$C_2H_4$-$SO_2$-$C_2H_4$-$OSO_3H$

als blaues Pulver, welches sich in Wasser mit blauer Farbe löst.

Die mit diesem Farbstoff auf Baumwolle nach den Applikationsmethoden für Vinylsulfon-Reaktivfarbstoffe erzeugten blauen Färbungen weisen gute Echtheitseigenschaften auf.

Weitere Farbstoffe, die sich nach den in den vorstehenden Beispielen angegebenen Verfahren herstellen lassen sind die Farbstoffe der Formeln

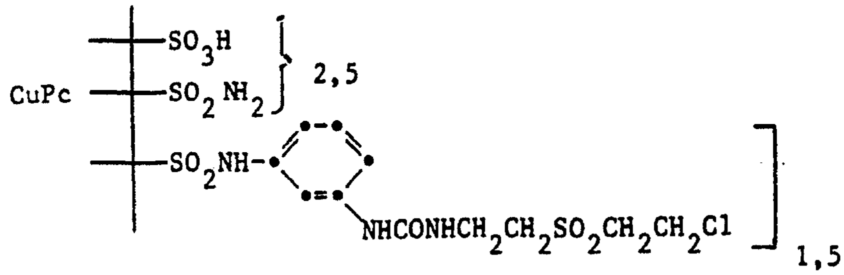

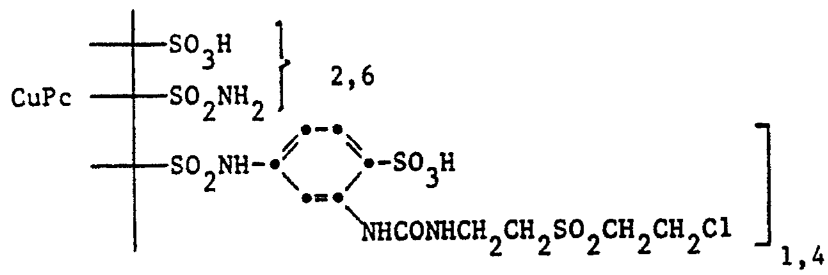

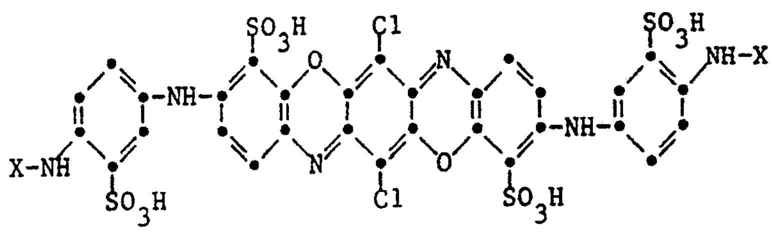

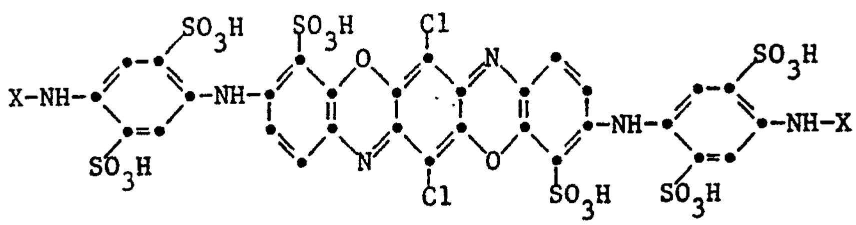

X = $CONHCH_2CH_2SO_2CH_2CH_2Cl$

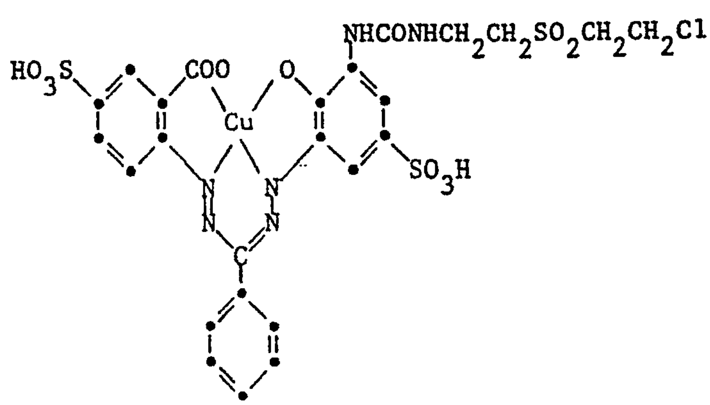

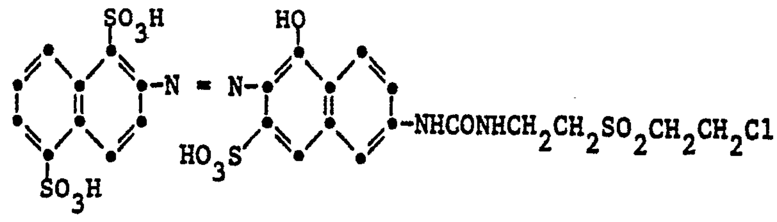

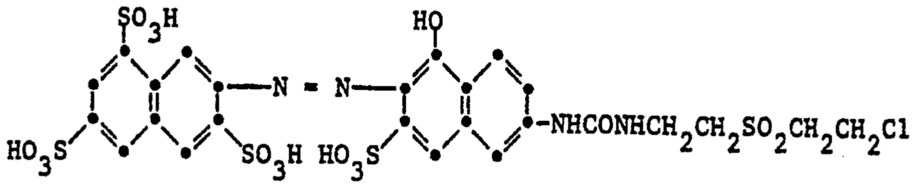

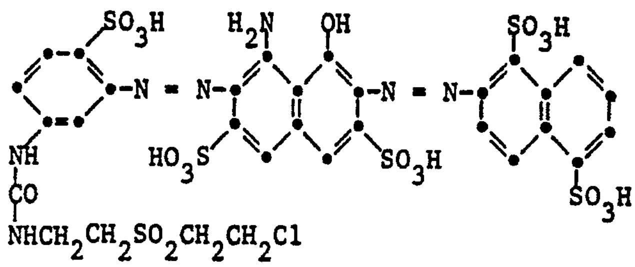

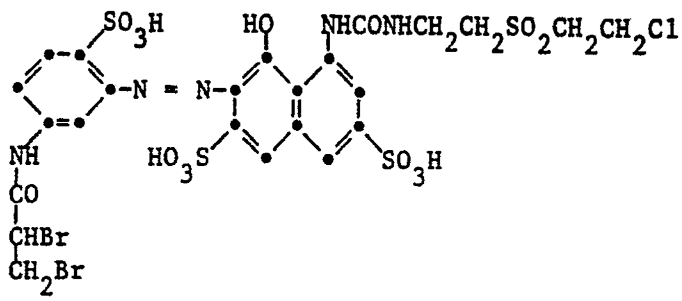

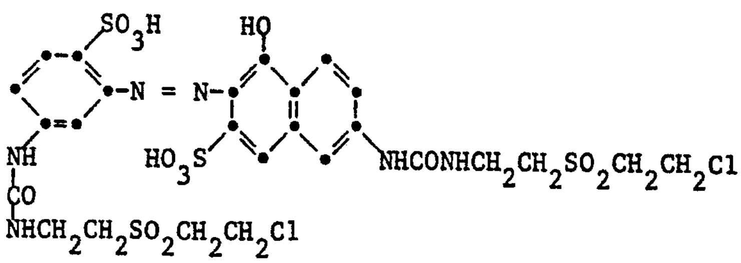

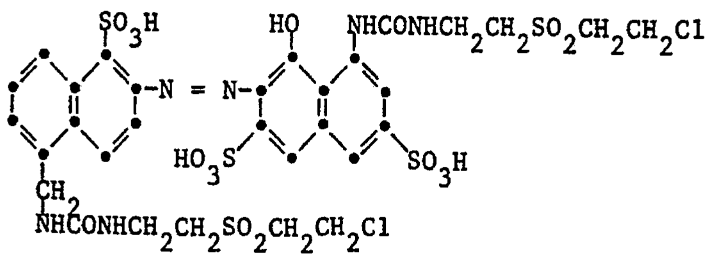

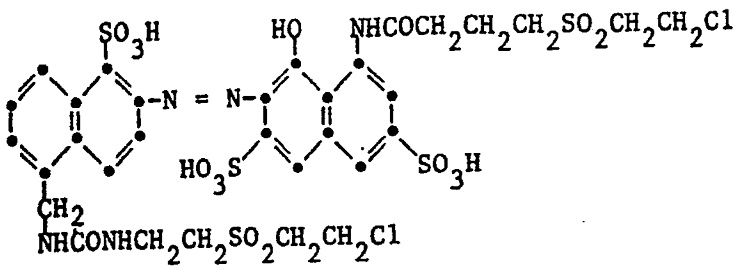

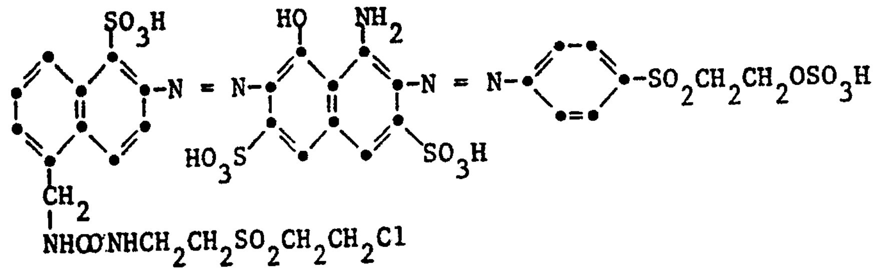

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem

nichtionogenen Waschmittel kochend geseift, nochmals gespült und getrocknet.

<u>Färbevorschrift V</u>

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

<u>Färbevorschrift VI</u>

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet. Dann imprägniert man das Gewebe mit einer 20° C Warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102° C, spült, seift während einer Viertelstunde in einer 0,3%igen kochenden Lösung eines nichtionogenen Waschmittels, spült und trocknet.

<u>Druckvorschrift I</u>

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102° C in gesättigten Dampf. Das bedruckte Gewebe wird dann gespült, gegebenenfalls kochend geseift und nochmals gespült, und anschliessend getrocknet.

<u>Druckvorschrift II</u>

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102° C in gesättigtem Dampf. Das bedruckte Gewebe wird dann gespült, gegebenenfalls kochend geseift und nochmals gespült, und anschliessend getrocknet.

**Patentansprüche**

**1.** Reaktivfarbstoffe der Formel

$$D - \left[ \underset{R}{\underset{|}{N}} - CO - \underset{B}{\underset{|}{N}} - A - SO_2 - Y \right]_n \qquad (1),$$

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder unsubstituiertes oder durch Halogen, Hydroxy, Cyan, $C_1$-$C_4$-Alkoxy, Carboxy oder Sulfo substituiertes $C_1$-$C_4$-Alkyl, A ein Polymethylenrest mit 2 bis 6 C-Atomen oder dessen verzweigte Isomere, der durch Chlor, Brom, Fluor, Hydroxy, Sulfato, Acyloxy mit 1 bis 4 C-Atomen, Cyano, Carboxy, Alkoxycarbonyl mit 1 bis 5 C-Atomen oder Carbamoyl substituiert sein kann, oder ein

Dialkylenätherrest mit 1 bis 6 C-Atomen in jedem Alkylenglied, unabhängig voneinander; Y ein Rest $-CH=CH_2$ oder $-CH_2CH_2-Z$, Z ein unter alkalischen Bedingungen abspaltbarer anorganischer oder organischer Rest, B Wasserstoff oder der Rest eines unsubstituierten oder durch Halogen, Hydroxy, Cyan, $C_1$-$C_4$-Alkoxy, Carboxy oder Sulfo substituierten Kohlenwasserstoffes, und n = 1 oder 2 ist.

**2.** Reaktivfarbstoffe gemäss Anspruch 1, worin B Wasserstoff oder $C_{1-4}$-Alkyl ist.

**3.** Reaktivfarbstoffe gemäss Anspruch 1 oder 2, worin B ein Rest der Formel

$$-A-SO_2-Y \quad (2)$$

ist, worin A und Y die in Anspruch 1 angegebenen Bedeutungen haben.

**4.** Reaktivfarbstoffe gemäss Anspruch 2 oder 3, worin A Aethylen ist.

**5.** Reaktivfarbstoffe gemäss Anspruch 2, der Formel

$$D \left[ \underset{\substack{| \\ R}}{N} - CO - NH - A - SO_2 Y \right]_n \qquad (3)$$

worin D, R, Y und n die in Anspruch 1 angegebenen Bedeutungen haben, und A $C_{2-4}$-Alkylen ist.

**6.** Reaktivfarbstoffe gemäss Anspruch 5, worin A Aethylen ist.

**7.** Reaktivfarbstoffe gemäss Anspruch 3, der Formel

$$D \left[ \underset{\substack{| \\ R}}{N} - CO - N(A - SO_2 - Y)_2 \right]_n \qquad (4),$$

worin D, R, Y und n die in Anspruch 1 angegebenen Bedeutungen haben, und A $C_{2-4}$-Alkylen ist.

**8.** Reaktivfarbstoffe gemäss Anspruch 7, worin A Aethylen ist.

**9.** Reaktivfarbstoffe gemäss einem der Ansprüche 1 bis 8, worin Y Vinyl, $\beta$-Sulfatoäthyl, $\beta$-Thiosulfatoäthyl, $\beta$-Phosphatoäthyl, $\beta$-Chloräthyl oder $\beta$-Acetoxyäthyl ist.

**10.** Reaktivfarbstoffe gemäss einem der Ansprüche 1 bis 9, worin D der Rest eines Mono- oder Disazofarbstoffes ist.

**11.** Reaktivfarbstoffe gemäss einem der Ansprüche 1 bis 9, worin D der Rest eines Metallkomplexazo- oder Formazanfarbstoffes ist.

**12.** Reaktivfarbstoffe gemäss einem der Ansprüche 1 bis 9, worin D der Rest eines Anthrachinonfarbstoffes ist.

**13.** Reaktivfarbstoffe gemäss Anspruch 11, worin D der Rest eines 1:1-Kupferkomplexazofarbstoffes der Benzol- oder Naphthalinreihe ist, und das Kupferatom an je eine metallisierbare Gruppe beidseitig in

ortho-Stellung zur Azobrücke gebunden ist.

**14.** Reaktivfarbstoffe gemäss Anspruch 10, der Formel

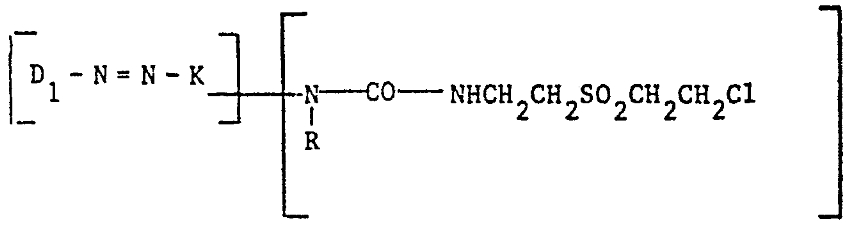 (5),

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

**15.** Reaktivfarbstoffe gemäss Anspruch 10, der Formel

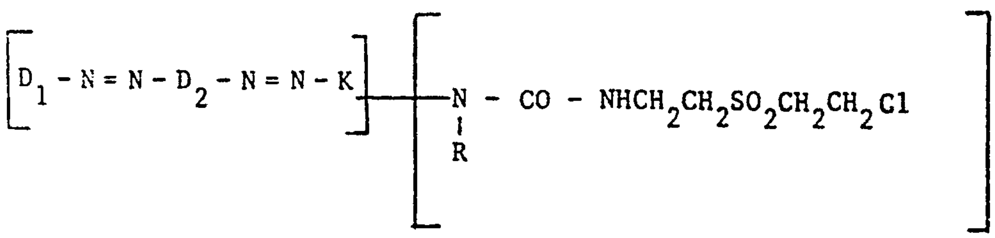 (6),

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, und der Reaktivrest an die Diazokomponente $D_1$ oder an die Kupplungskomponente K gebunden ist, oder je ein Reaktivrest an $D_1$ und K gebunden ist.

**16.** Reaktivfarbstoffe gemäss Anspruch 10, der Formel

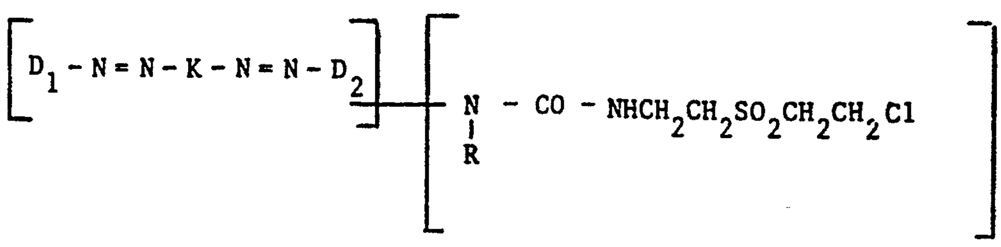 (7),

worin $D_1$ und $D_2$ je ein Rest einer Diazokomponente der Benzol- oder Naphthalinreihe, K der Rest einer Kupplungskomponente der Aminonaphtholsulfonsäure-Reihe, R Wasserstoff, Methyl oder Aethyl, und n = 1 oder 2 ist, und der Reaktivrest an die Diazokomponente $D_1$ oder an die Diazokomponente $D_2$ gebunden ist, oder je ein Reaktivrest an $D_1$ und $D_2$ gebunden ist.

**17.** 1:1-Kupferkomplexe von Reaktivfarbstoffen gemäss den Ansprüchen 14 bis 16.

**18.** Reaktivfarbstoff gemäss Anspruch 16, der Formel

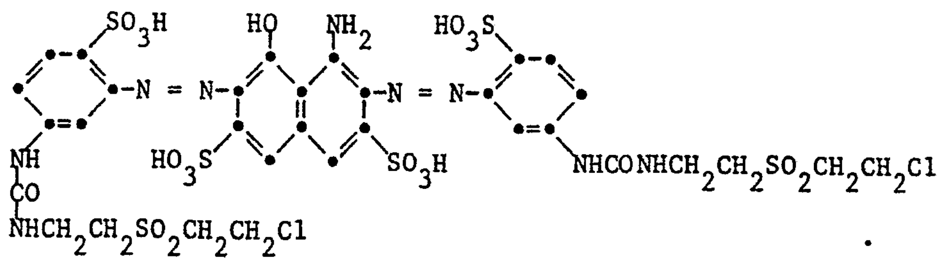

19. Verfahren zur Herstellung von Reaktivfarbstoffen gemäss Anspruch 1, dadurch gekennzeichnet, dass man organische Farbstoffe der Formel

$$D - \left[ \underset{\displaystyle R}{\underset{|}{N}} - H \right]_n \qquad (8)$$

oder Farbstoffvorprodukte, und mindestens ein Aequivalent eines den Rest der Formel

$$- CO - \underset{\displaystyle B}{\underset{|}{N}} - A - SO_2 - Y \qquad (9)$$

einführenden Mittels zu einem Reaktivfarbstoff der Formel (1) umsetzt, wobei D, R, n, A, Y und B in den Formeln (8) und (9) die in Anspruch 1 angegebenen Bedeutungen haben, und dass man im Falle der Verwendung von Farbstoffvorprodukten, diese in die gewünschten Endfarbstoffe umwandelt.

20. Verwendung der Reaktivfarbstoffe gemäss Anspruch 1 zum Färben oder Bedrucken.

21. Verwendung gemäss Anspruch 19, zum Färben oder Bedrucken von Cellulosefasern.

**Claims**

1. A reactive dye of the formula

$$D - \left[ \underset{\displaystyle R}{\underset{|}{N}} - CO - \underset{\displaystyle B}{\underset{|}{N}} - A - SO_2 - Y \right]_n \qquad (1)$$

in which D is the radical of an organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, R is hydrogen or $C_1$-$C_4$alkyl which is unsubstituted or substituted by halogen, hydroxyl, cyano, $C_1$-$C_4$alkoxy, carboxyl or sulfo, A is a polymethylene radical having 2 to 6 C atoms (or its branched isomers) which can be substituted by chlorine, bromine, fluorine, hydroxyl, sulfato, acyloxy having 1 to 4 C atoms, cyano, carboxyl, alkoxycarbonyl having 1 to 5 C atoms or carbamoyl, or an alkyleneoxyalkylene radical having 1 to 6 C atoms in each alkylene member, independently of each other; Y is a radical $-CH\text{-}CH_2$ or $-CH_2CH_2\text{-}Z$, Z is an inorganic or organic radical detachable under alkaline conditions, B is hydrogen or the radical of a hydrocarbon which is unsubstituted or substituted by halogen, hydroxyl, cyano, $C_1$-$C_4$alkoxy, carboxyl or sulfo, and n is 1 or 2.

**2.** A reactive dye according to claim 1, in which B is hydrogen or $C_{1-4}$alkyl.

**3.** A reactive dye according to claim 1 or 2, in which B is a radical of the formula

$$-A-SO_2-Y \qquad (2)$$

in which A and Y are as defined in claim 1.

**4.** A reactive dye according to claim 2 or 3, in which A is ethylene.

**5.** A reactive dye according to claim 2, of the formula

$$D-\left[\underset{\substack{|\\R}}{N}-CO-NH-A-SO_2\,Y\right]_n \qquad (3)$$

in which D, R, Y and n are as defined in claim 1 and A is $C_{2-4}$alkylene.

**6.** A reactive dye according to claim 5, in which A is ethylene.

**7.** A reactive dye according to claim 3, of the formula

$$D-\left[\underset{\substack{|\\R}}{N}-CO-N(A-SO_2-Y)_2\right]_n \qquad (4)$$

in which D, R, Y and n are as defined in claim 1 and A is $C_{2-4}$alkylene.

**8.** A reactive dye according to claim 7, in which A is ethylene.

**9.** A reactive dye according to any one of claims 1 to 8, in which Y is vinyl, $\beta$-sulfatoethyl, $\beta$-thiosulfatoethyl, $\beta$-phosphatoethyl, $\beta$-chloroethyl or $\beta$-acetoxyethyl.

**10.** A reactive dye according to any one of claims 1 to 9, in which D is the radical of a monoazo or disazo dye.

**11.** A reactive dye according to any one of claims 1 to 9, in which D is the radical of a metal complex azo or formazan dye.

**12.** A reactive dye according to any one of claims 1 to 9, in which D is the radical of an anthraquinone dye.

**13.** A reactive dye according to claim 11, in which D is the radical of a 1:1 copper complex azo dye of the benzene or naphthalene series and the copper atom is bonded to a metallisable group on either side, in orthoposition relative to the azo bridge.

**14.** A reactive dye according to claim 10, of the formula

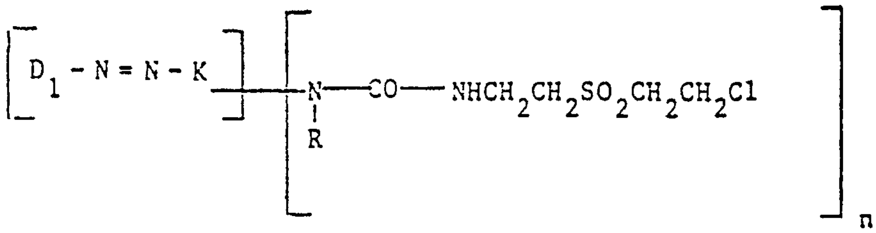

(5)

in which $D_1$ is the radical of a diazo component of the benzene or naphthalene series, K is the radical of a coupling component of the benzene or naphthalene series or of the heterocyclic series, R is hydrogen, methyl or ethyl, and n is 1 or 2, and the reactive radical is bonded to the diazo component or to the coupling component, or one reactive radical each is bonded to the diazo component and to the coupling component.

**15.** A reactive dye according to claim 10, of the formula

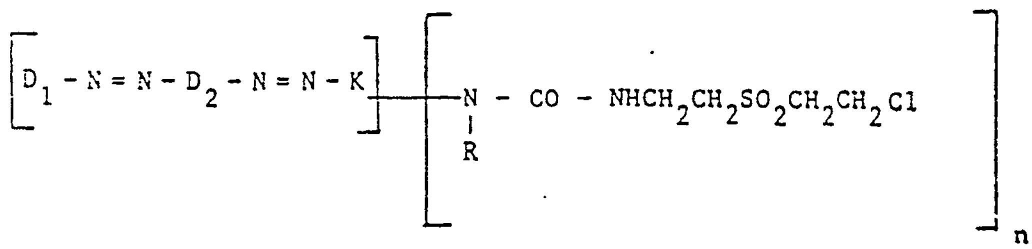

(6)

in which $D_1$ and $D_2$ are each a radical of a diazo component of the benzene or naphthalene series, K is the radical of a coupling component of the benzene or naphthalene series or of the heterocyclic series, R is hydrogen, methyl or ethyl, and n is 1 or 2, and the reactive radical is bonded to the diazo component $D_1$ or to the coupling component K or one reactive radical each is bonded to $D_1$ and K.

**16.** A reactive dye according to claim 10, of the formula

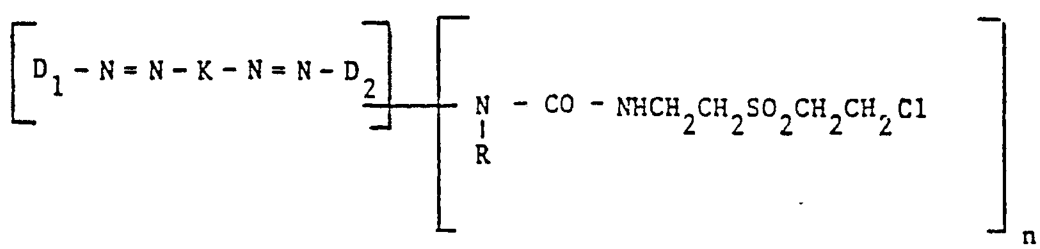

(7)

in which $D_1$ and $D_2$ are each a radical of a diazo component of the benzene or naphthalene series, K is the radical of a coupling component of the aminonaphtholsulfonic acid series, R is hydrogen, methyl or ethyl, and n is 1 or 2, and the reactive radical is bonded to the diazo component $D_1$ or to the diazo component $D_2$, or one reactive radical each is bonded to $D_1$ and $D_2$.

**17.** A 1:1 copper complex of a reactive dye according to claims 14 to 16.

**18.** A reactive dye according to claim 16, of the formula

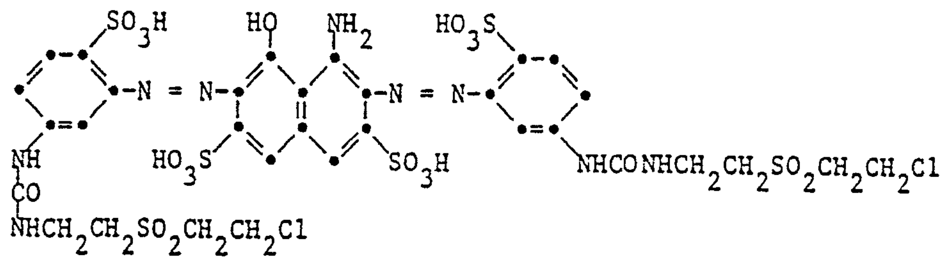

19. A process for preparing a reactive dye according to claim 1, which comprises reacting an organic dye of the formula

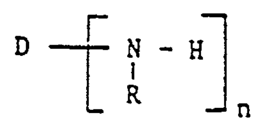

(8)

or dye precursors and at least one equivalent of an agent introducing the radical of the formula

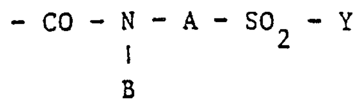

(9)

to form a reactive dye of the formula (1) where D, R, n, A, Y and B in the formulae (8) and (9) are as defined in claim 1 and, if dye precursors are used, converting these into the desired final dyes.

20. Use of a reactive dye according to claim 1 for dyeing or printing.

21. Use according to claim 20 for dyeing or printing cellulose fibres.

## Revendications

1. Colorants réactifs de formule

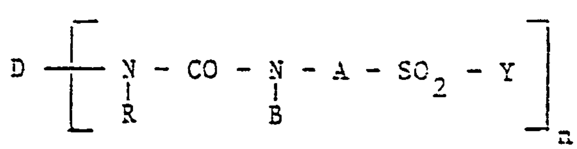

(1) ,

dans laquelle D est le reste d'un colorant organique de la série mono- ou polyazoïque, azoïque à complexe métallique, anthraquinonique, phtalocyanine, formazan, azométhine, dioxazine, phénazine, stilbène, triphénylméthane, xanthène, thioxanthone, nitroaryle, naphtoquinone, pyrènequinone ou pérylènetétracarbimide, R est un atome d'hydrogène ou un radical alkyle en $C_1$-$C_4$ non substitué ou substitué par un atome d'halogène ou par un groupe hydroxy, cyano, alcoxy en $C_1$-$C_4$, carboxy ou sulfo, A est un radical polyméthylène ayant de 2 à 6 atomes de carbone ou ses isomères ramifiés, qui peut être substitué par un atome de chlore, de brome, de fluor, ou par un groupe hydroxy, sulfato, acyloxy ayant de 1 à 4 atomes de carbone, cyano, carboxy, alcoxycarbonyle ayant de 1 à 5 atomes de carbone ou carbamoyle, ou un reste dialkylène-éther ayant de 1 à 6 atomes de carbone dans chaque fragment alkylène, indépendamment l'un de l'autre; Y est un radical $-CH=CH_2$ ou $-CH_2CH_2-Z$, Z étant un radical organique ou inorganique séparable dans des conditions alcalines, B est un atome d'hydrogène ou le reste d'un hydrocarbure non substitué ou substitué par un atome d'halogène ou par un groupe hydroxy, cyano, alcoxy en $C_1$-$C_4$, carboxy ou sulfo, et n vaut 1 ou 2.

2. Colorants réactifs selon la revendication 1, dans lesquels B est un atome d'hydrogène ou un groupe alkyle en $C_1$-$C_4$.

3. Colorants réactifs selon la revendication 1 ou 2, dans lesquels B est un reste de formule

$$-A-SO_2-Y \qquad (2)$$

dans laquelle A et Y ont les significations données dans la revendication 1.

4. Colorants réactifs selon la revendication 2 ou 3, dans lesquels A est le groupe éthylène.

5. Colorants réactifs selon la revendication 2, de formule

$$D\left[\underset{\displaystyle R}{\underset{|}{N}}-CO-NH-A-SO_2-Y\right]_n \qquad (3)$$

dans laquelle D, R, Y et n ont les significations données dans la revendication 1, et A est un groupe alkylène en $C_2$-$C_4$.

6. Colorants réactifs selon la revendication 5, dans lesquels A est le groupe éthylène.

7. Colorants réactifs selon la revendication 3, de formule

$$D\left[\underset{\displaystyle R}{\underset{|}{N}}-CO-N(A-SO_2-Y)_2\right]_n \qquad (4),$$

dans laquelle D, R, Y et n ont les significations données dans la revendication 1, et A est un groupe alkylène en $C_2$-$C_4$.

8. Colorants réactifs selon la revendication 7, dans lesquels A est le groupe éthylène.

9. Colorants réactifs selon l'une des revendications 1 à 8, dans lesquels Y est le groupe vinyle, $\beta$-sulfatoéthyle, $\beta$-thiosulfatoéthyle, $\beta$-phosphatoéthyle, $\beta$-chloréthyle ou $\beta$-acétoxyéthyle.

10. Colorants réactifs selon l'une des revendications 1 à 9, dans lesquels D est le reste d'un colorant mono- ou disazoïque.

11. Colorants réactifs selon l'une des revendications 1 à 9, dans lesquels D est le reste d'un colorant formazan ou azoïque à complexe métallique.

12. Colorants réactifs selon l'une des revendications 1 à 9, dans lesquels D est le reste d'un colorant anthraquinonique.

13. Colorants réactifs selon la revendication 11, dans lesquels D est le reste d'un colorant azoïque à complexe de cuivre 1:1 de la série du benzène ou du naphtalène, et l'atome de cuivre est lié de chacun des deux côtés à un groupe métallable, en position ortho par rapport au pont azoïque.

**14.** Colorants réactifs selon la revendication 10, de formule

$$\left[D_1 - N = N - K\right]\left[\underset{\substack{|\\ R}}{N} - CO - NHCH_2CH_2SO_2CH_2CH_2Cl\right]_n \qquad (5),$$

dans laquelle $D_1$ est le reste d'un composant diazo de la série du benzène ou du naphtalène, K est le reste d'un composant de copulation de la série du benzène ou du naphtalène ou de la série hétérocyclique, R est un atome d'hydrogène ou le groupe méthyle ou éthyle, et n vaut 1 ou 2, et le radical réactif est lié au composant diazo ou au composant de copulation, ou un radical réactif est lié à chacun du composant diazoïque et du composant de copulation.

**15.** Colorants réactifs selon la revendication 10, de formule

$$\left[D_1 - N = N - D_2 - N = N - K\right]\left[\underset{\substack{|\\ R}}{N} - CO - NHCH_2CH_2SO_2CH_2CH_2Cl\right]_n \qquad (6),$$

dans laquelle $D_1$ et $D_2$ sont chacun un reste d'un composant diazo de la série du benzène ou du naphtalène, K est le reste d'un composant de copulation de la série du benzène ou du naphtalène ou de la série hétérocyclique, R est un atome d'hydrogène ou le groupe méthyle ou éthyle, et n vaut 1 ou 2, et le radical réactif est lié au composant diazo $D_1$ ou au composant de copulation K, ou un radical réactif est lié à chacun de $D_1$ et K.

**16.** Colorants réactifs selon la revendication 10, de formule

$$\left[D_1 - N = N - K - N = N - D_2\right]\left[\underset{\substack{|\\ R}}{N} - CO - NHCH_2CH_2SO_2CH_2CH_2Cl\right]_n \qquad (7),$$

dans laquelle $D_1$ et $D_2$ sont chacun un reste d'un composant diazo de la série du benzène ou du naphtalène, K est le reste d'un composant de copulation de la série de l'acide aminonaphtolsulfonique, R est un atome d'hydrogène ou le groupe méthyle ou éthyle, et n vaut 1 ou 2, et le radical réactif est lié au composant diazo $D_1$ ou au composant diazo $D_2$, ou un radical réactif est lié à chacun de $D_1$ et $D_2$.

**17.** Complexes de cuivre 1:1 de colorants réactifs selon les revendications 14 à 16.

**18.** Colorant réactif selon la revendication 16, de formule

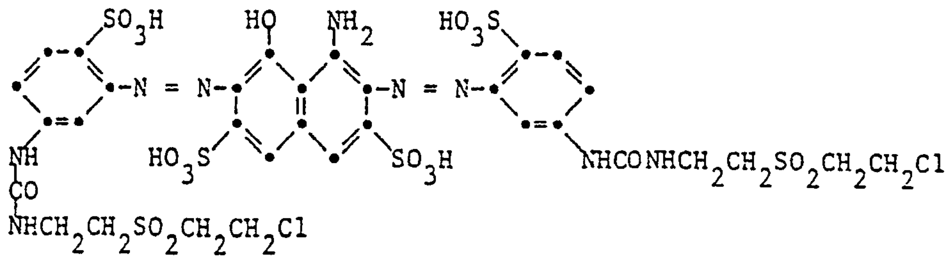

**19.** Procédé pour la préparation de colorants réactifs selon la revendication 1, caractérisé en ce que l'on fait réagir des colorants organiques de formule

$$D-\left[\begin{array}{c}N-H\\ |\\ R\end{array}\right]_n \qquad (8)$$

ou des précurseurs de colorants, et au moins un équivalent d'un agent introduisant le reste de formule

$$-CO-\underset{\underset{B}{|}}{N}-A-SO_2-Y \qquad (9)$$

pour aboutir à un colorant réactif de formule (1), D, R, n, A, Y et B dans les formules (8) et (9) ayant les significations données dans la revendication 1, et en ce que, dans le cas de l'utilisation de précurseurs de colorants, on convertit ceux-ci en les colorants finals recherchés.

**20.** Utilisation des colorants réactifs selon la revendication 1, pour la teinture ou l'impression.

**21.** Utilisation selon la revendication 19, pour la teinture ou l'impression de fibres cellulosiques.